# EUROPEAN PATENT SPECIFICATION

(11) **EP 3 729 275 B1**
(45) Date of publication and mention of the grant of the patent: **12.01.2022**
(21) Application number: 18847146.0
(22) Date of filing: 17.12.2018
(51) Int. Cl.: G06F 11/36, G06F 11/32, G06F 11/34, G06F 3/0481

(54) **ELECTRONIC PRODUCT TESTING METHOD AND MEDIUM**
TESTVERFAHREN FÜR ELEKTRONISCHE PRODUKTE MIT ENTSPRECHENDES MEDIUM
MÉTHODE DE TEST DE PRODUITS ÉLECTRONIQUES ET MEDIUM ASSOCIÉ

(30) Priority: 20.12.2017 US 201715849475
(43) Date of publication of application: 28.10.2020
(73) Proprietor: RAINFOREST QA, INC., San Francisco, CA 94107 (US)
(72) Inventor: GRYKA, Maciej, 14467 Potsdam (DE); SIWEK, Maciej, London SW12 9LQ (GB); SMITH, Russell Howard, San Francisco, CA 94107 (US)
(74) Representative: Lee, Rabinder
(86) International application number: PCT/IB2018/060170
(87) International publication number: WO 2019/123199

(56) References cited:
- WO-A1-2017/123203
- US-A1- 2011 107 153
- US-A1- 2013 339 931
- US-A1- 2014 189 576
- RICHARD ATTERER ET AL: "Knowing the user's every move", WWW '06 PROCEEDINGS OF THE 15TH INTERNATIONAL CONFERENCE ON WORLD WIDE WEB, ACM, NEW YORK, NY, USA, 23 May 2006 (2006-05-23), pages 203-212, XP058095370, DOI: 10.1145/1135777.1135811 ISBN: 978-1-59593-323-2

## Description

### RELATED APPLICATION DATA

This disclosure is related to U.S. Patent Application No. 15/784,064, filed on October 13, 2017.

### FIELD

This application relates generally to product testing, and more specifically, to systems and methods for providing product testing.

### BACKGROUND

Many products require product testing. Supplier of products generally require products be tested before they can be made available to customers. Testing of products can be a lengthy and complicated process. There may be many different technical features in the product that need to be tested under different testing parameters. Many product suppliers may not have in-house product testers. These product suppliers will need to outsource product testing to outside product testers. However, finding the right product testers who can adequately perform the product testing project can itself be a time consuming process, and can be challenging. If the product supplier needs fast turn-around time for the product testing for its product, such out-sourcing technique may not be suitable.

WO2017123203A1 relates to determining visual testing coverages and describes a visual testing coverage engine to automatically identify, based on an analysis of gaze data and user interface elements, a visual testing coverage of an application under test.

### SUMMARY

In a first aspect of the invention, there is provided a processor-implemented method for product testing as defined in claim 1.

Optionally, the data in the electronic file comprises information regarding tracked actions of a tester, and respective time stamps of the tracked actions.

Optionally, the act of performing the testing of the second product comprises re-executing the tracked actions to test the second product based on the information in the electronic file regarding the tracked actions of the tester.

Optionally, the act of performing the testing of the second product comprises simulating actions of a tester.

Optionally, the electronic file comprises a script, and wherein the act of performing the testing of the second product comprises running the script for testing the second product.

Optionally, the data in the electronic file are based on tracked action(s).

Optionally, the data in the electronic file comprises: cursor positions; a text typed by a tester; a location of the text typed by the tester, a location of an object selection; or any combination of the foregoing.

Optionally, the method further includes: obtaining a first image that is associated with the testing of the first product, and obtaining a second image that is associated with the testing of the second product.

Optionally, the first image is stored in a non-transitory medium in association with the data, the data comprising information regarding a tracked action of a tester.

Optionally, the first image is based on a completion of a first task performed during the testing of the first product, and wherein the second image is based on a completion of a second task performed during the testing of the second product.

Optionally, the first image comprises a first content of the first product, the first content indicating a first result of a first task for testing the first product; and wherein the second image comprises a second content of the second product, the second content indicating a second result of a second task for testing the second product.

Optionally, the method further includes: applying a mask to the first image to create a first masked image, applying the mask to the second image to create a second masked image, and comparing the first masked image with the second masked image.

Optionally, the mask is configured to block out one or more portions of the first image and the second image.

Optionally, the testing of the second product comprises testing a feature of the second product, and wherein the method further comprising determining whether the testing of the feature of the second product fails or not based on the comparison of the first masked image and the second masked image.

Optionally, the processing unit is configured to test multiple features of the second product, the multiple features comprising at least a first feature and a second feature, wherein the act of performing testing of the second product comprises testing the first feature of the second product by running a first script that is based on a first tracked action of a tester, and testing the second feature of the second product by running a second script that is based on a second tracked action of the tester.

Optionally, the method further includes determining the second image by comparing a sequence of image frames with the first image, and selecting one of the image frames that matches the first image as the second image.

Optionally, the method further includes tracking an interaction of a tester with a web page, wherein the data in the electronic file is based on the tracked interaction.

Optionally, the act of tracking comprises tracking a movement of a cursor.

Optionally, the act of tracking comprises tracking a selection of a tab, a selection of a button, a selection of an icon, a selection of a text, a key stroke, a voice input or any combination of the foregoing.

The first product comprises a web page, a web site, a computer application, a mobile device application, or a processor application.

Optionally, the act of performing the testing of the second product comprises virtually moving a cursor with respect to a testing interface without input from a cursor control.

Optionally, the act of performing the testing of the second product comprises virtually making a cursor selection in a testing interface without input from a cursor control.

Optionally, the act of performing the testing of the second product comprises virtually typing a text in a field of a testing interface without input from a keyboard.

Optionally, the testing of the first product is human-based, and the testing of the second product is machine-based.

Optionally, the data comprises information regarding a selection of a first object, the first object being at a first position in the first product; and the testing of the second product comprises selecting a second object in the second product based on the information regarding the selection of the first object in the first product, the second object being at a second position in the second product, wherein the second position is different from the first position.

In a second aspect of the invention, there is provided a processor-readable medium in accordance with claim 20.

Other and further aspects and features will be evident from reading the detailed description of the embodiments, presented after the following examples which are unclaimed embodiments in the following section entitled "Examples".

### EXAMPLES

An electronic product testing system includes: one or more input(s) configured to obtain a first image that is associated with a testing of the first product, and to obtain a second image that is associated with a testing of the second product, wherein the testing of the second product comprises a testing of a feature of the second product; a mask applicator configured to apply a mask to the first image to create a first masked image, and to apply the mask to the second image to create a second masked image; and a comparator configured to compare the first masked image with the second masked image to determine whether the testing of the feature of the second product fails or not.

Optionally, the first image is based on a completion of a first task performed during the testing of the first product, and wherein the second image is based on a completion of a second task performed during the testing of the second product.

Optionally, the first image comprises a first content of the first product, the first content indicating a first result of a first task for testing the first product; and wherein the second image comprises a second content of the second product, the second content indicating a second result of a second task for testing the second product.

Optionally, the mask is configured to block out one or more portions of the first image and the second image.

Optionally, the system further includes an image capturer configured to determine the second image by comparing a sequence of image frames with the first image, and selecting one of the image frames that matches the first image as the second image.

A processor-implemented method for product testing, includes: obtaining, by one or more input(s), a first image that is associated with a testing of the first product, and a second image that is associated with a testing of the second product, wherein the testing of the second product comprises a testing of a feature of the second product; applying, by a mask applicator, a mask to the first image to create a first masked image; applying, by the mask applicator, the mask to the second image to create a second masked image; and comparing, by a comparator, the first masked image with the second masked image to determine whether the testing of the feature of the second product fails or not.

Optionally, the first image is based on a completion of a first task performed during the testing of the first product, and wherein the second image is based on a completion of a second task performed during the testing of the second product.

Optionally, the first image comprises a first content of the first product, the first content indicating a first result of a first task for testing the first product; and wherein the second image comprises a second content of the second product, the second content indicating a second result of a second task for testing the second product.

Optionally, the mask is configured to block out one or more portions of the first image and the second image.

Optionally, the method further includes determining, by an image capturer, the second image by comparing a sequence of image frames with the first image, and selecting one of the image frames that matches the first image as the second image.

A processor-readable medium includes a set of instructions, wherein an execution of the instructions by a processing unit will cause a method for product testing to be performed, the method comprising: obtaining, by one or more input(s), a first image that is associated with a testing of the first product, and a second image that is associated with a testing of the second product, wherein the testing of the second product comprises a testing of a feature of the second product; applying, by a mask applicator, a mask to the first image to create a first masked image; applying, by the mask applicator, the mask to the second image to create a second masked image; and comparing, by a comparator, the first masked image with the second masked image to determine whether the testing of the feature of the second product fails or not.

An apparatus for use in product testing, includes: an input configured to receive first data regarding a first tracked action performed while testing a first product; and a processing unit configured to create a script based on the first data, wherein the script is electronically executable by a product testing machine to perform machine-testing of a second product, the second product having at least one feature that is different from the first product.

Optionally, the apparatus is a part of the product testing machine.

Optionally, the input is also configured to receive second data regarding a second tracked action performed while testing the first product, and wherein the processing unit is configured to create the script based also on the second data.

Optionally, the first tracked action was for testing a first feature of the first product, and the second tracked action was for testing a second feature of the first product.

Optionally, the first tracked action was for testing a feature of the first product by a first tester, and the second tracked action was for testing the feature of the first product by a second tester.

Optionally, the first data indicates a first period between the first tracked action and another tracked action performed by the first tester while testing the feature of the first product; wherein the second data indicates a second period between the second tracked action and another tracked action performed by the second tester while testing the feature of the first product; and wherein the processing unit is configured to select a shorter one of the first period and the second period for inclusion in the script.

Optionally, the first data is stored in a first file, the second data is stored in a second file, and wherein the processing unit is configured to create the script by combining the first data and the second data.

Optionally, the apparatus further includes a non-transitory medium configured to store the script for access by the product testing machine.

Optionally, the first tracked action comprises a tracked cursor movement, a tracked object selection, a typing of a text, an inputting of a key, or an outputting of a voice.

A processor-implemented method for product testing, includes: receiving first data regarding a first tracked action performed while testing a first product; and creating, by a processing unit, a script based on the first data, wherein the script is electronically executable by a product testing machine to perform machine-testing of a second product, the second product having at least one feature that is different from the first product.

Optionally, the processing unit is a part of the product testing machine.

Optionally, the method further includes receiving second data regarding a second tracked action performed while testing the first product, and wherein the script is created based also on the second data.

Optionally, the first tracked action was for testing a first feature of the first product, and the second tracked action was for testing a second feature of the first product.

Optionally, the first tracked action was for testing a feature of the first product by a first tester, and the second tracked action was for testing the feature of the first product by a second tester.

Optionally, the first data indicates a first period between the first tracked action and another tracked action performed by the first tester while testing the feature of the first product; wherein the second data indicates a second period between the second tracked action and another tracked action performed by the second tester while testing the feature of the first product; and wherein the method further comprises selecting a shorter one of the first period and the second period for inclusion in the script.

Optionally, the first data is stored in a first file, the second data is stored in a second file, and wherein the script is created by combining the first data and the second data.

Optionally, the method further includes storing the script in a non-transitory medium for access by the product testing machine.

Optionally, the first tracked action comprises a tracked cursor movement, a tracked object selection, a typing of a text, an inputting of a key, or an outputting of a voice.

A processor-readable medium includes a set of instructions, wherein an execution of the instructions by a processing unit will cause a method for to be performed, the method comprising: receiving first data regarding a first tracked action performed while testing a first product; and creating, by the processing unit, a script based on the first data, wherein the script is electronically executable by a product testing machine to perform machine-testing of a second product, the second product having at least one feature that is different from the first product.

An apparatus for use in product testing, includes: one or more input(s) configured to receive a first image of a product captured during a first testing of the product, and a second image of the product captured during a second testing of the product; an image analyzer configured to determine a first part of the product that is different in the first image and the second image; and a mask generator configured to create a mask for covering an image of the first part of the product.

Optionally, the first testing of the product is associated with a first tester, and the second testing of the product is associated with a second tester.

Optionally, the image analyzer is configured to perform an image subtraction based on the first image and the second image to obtain a subtracted image.

Optionally, the image analyzer is configured to analyze a distribution of non-zero pixel values in the subtracted image.

Optionally, the mask generator is configured to create the mask based on a result of the analysis of the distribution of the non-zero pixel values in the subtracted image.

Optionally, the image analyzer is configured to determine a second part of the product that is different in the first image and the second image, and wherein the mask generator is configured to create the mask for also covering the image of the second part of the product.

Optionally, the apparatus further includes a non-transitory medium configured to store the mask in association with an identity of the product.

A processor-implemented method for product testing, includes: receiving a first image of a product captured during a first testing of the product; receiving a second image of the product captured during a second testing of the product; determining a first part of the product that is different in the first image and the second image; and creating a mask for covering an image of the first part of the product.

Optionally, the first testing of the product is associated with a first tester, and the second testing of the product is associated with a second tester.

Optionally, the act of determining the first part of the product that is different in the first image and the second image comprises performing an image subtraction based on the first image and the second image to obtain a subtracted image.

Optionally, the act of determining the first part of the product that is different in the first image and the second image also comprises analyzing a distribution of non-zero pixel values in the subtracted image.

Optionally, the mask is created based on a result of the analysis of the distribution of the non-zero pixel values in the subtracted image.

Optionally, the method further includes determining a second part of the product that is different in the first image and the second image, and wherein the mask is created for also covering the image of the second part of the product.

Optionally, the method further includes storing the mask in a non-transitory medium in association with an identity of the product.

A processor-readable medium includes a set of instructions, wherein an execution of the instructions by a processing unit will cause a method for to be performed, the method comprising: receiving a first image of a product captured during a first testing of the product; receiving a second image of the product captured during a second testing of the product; determining a first part of the product that is different in the first image and the second image; and creating a mask for covering an image of the first part of the product.

Aspects and features of the invention will be evident from reading the following detailed description of the embodiments, whereby the invention is defined by the scope of the appended claims alone.

### BRIEF DESCRIPTION OF THE DRAWINGS

The drawings illustrate the design and utility of embodiments, in which similar elements are referred to by common reference numerals. These drawings are not necessarily drawn to scale. In order to better appreciate how the above-recited and other advantages and objects are obtained, a more particular description of the embodiments will be rendered, which are illustrated in the accompanying drawings. These drawings depict only typical embodiments and are not therefore to be considered limiting of its scope.
**FIG. 1A** illustrates a system for providing product testing.
**FIG. 1B** illustrates an example of the system of **FIG. 1A****.**
**FIG. 2A** illustrates a method for providing product testing.
**FIG. 2B** illustrates a method of tracking a progress of a product testing session.
**FIG. 3** illustrates an example of a user interface for providing a notification to a product tester.
**FIG. 4** illustrates an example of a testing environment having a user interface for allowing a product tester to perform product testing.
**FIG. 5** illustrates an example of a data structure for linking assigned product testing tasks with product testing questions, answers, and tracker identifiers.
**FIG. 6** illustrates an example of an image capturing an interaction of a product tester with a product being tested.
**FIG. 7** illustrates an example of a data structure for creating a graphic associated with an image of a web page being tested.
**FIG. 8A-8C** illustrates an example of a report summarizing a result of a product testing.
**FIG. 9** illustrates an example of a user interface for allowing a user to create tasks for product testing and to define product testing parameters.
**FIG. 10A-10E** illustrate an example of a report that is provided to an administrator of the system of **FIG. 1A****.**
**FIG. 11** illustrates a system for providing product testing.
**FIG. 12** illustrates an example of the system of **FIG. 11****.**
**FIGS. 13A-13F** illustrate an example of tracking actions of a tester performing product testing using a testing interface.
**FIG. 14** illustrates an example of an interface being used by a product testing machine to perform product testing.
**FIG. 15** illustrates an image processing technique.
**FIG. 16** illustrates a concept of image capture for image matching.
**FIG. 17** illustrates a method for providing product testing.
**FIG. 18** illustrates a component of a product testing system.
**FIG. 19** illustrates a method for use in product testing.
**FIG. 20** illustrates a component of a product testing system.
**FIG. 21** illustrates a method for use in product testing.
**FIG. 22** illustrates a component of a product testing system.
**FIG. 23** illustrates a method for use in product testing.
**FIG. 24** is a block diagram of a specialized processing system.

### DESCRIPTION OF THE EMBODIMENTS

Various embodiments are described hereinafter with reference to the figures. It should be noted that the figures are not drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated.

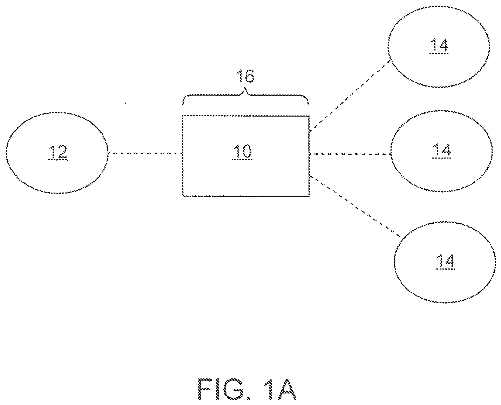

**FIG. 1A** illustrates a system 10 for providing product testing. The system 10 is configured to connect a party 12 that has developed a product with one or more product testers 14. By means of non-limiting examples, the product may be a web page, a web site, a computer application (e.g., an enterprise application), a mobile (e.g., handheld) device application, an application for a specialized processor (e.g., an image processor, a signal processor, a sound processor, a speech processor, a processor in a vehicle (such as a car, a plane, etc.), or any of other types of processor). The product testers 14 may be individuals residing in different parts of the world. For example, the testers 14 may reside in different parts of a city, different cities, different states, and/or different countries. In the illustrated embodiments, the system 10 is associated with a party 16 that is different from the party 12. For example, the party 12 (first party) providing the product may be a first company, and the party 16 (second party) interfacing with the party 12 and the product testers 14 may be a second company that is not the same as the first company. Also, in some embodiments, the product testers 14 are not employees of the first party 12, and are not employees of the second party 16. For example, the product testers 14 may be individual contractors. In other embodiments, one or more of the product testers 14 may be employees of the party 16.

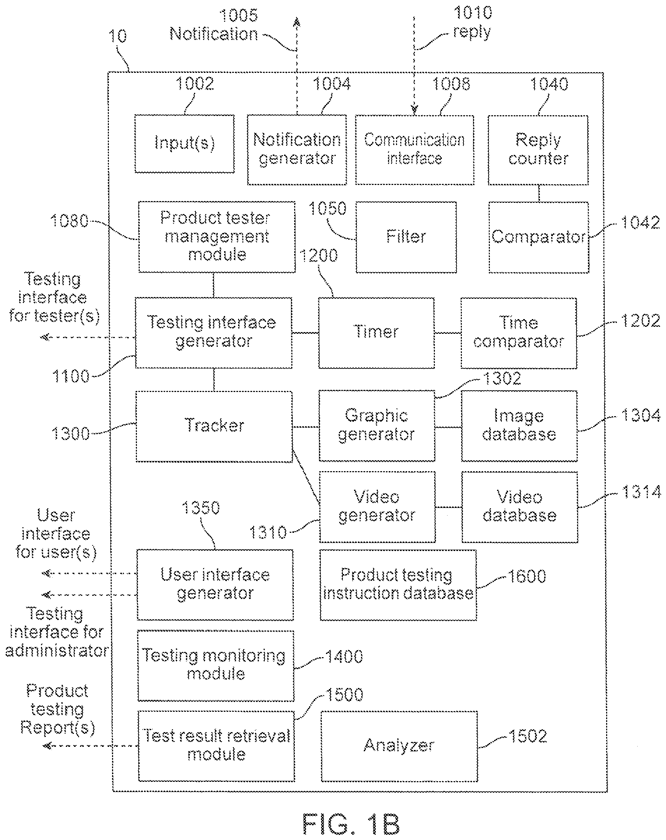

**FIG. 1B** illustrates an example of the system 10 of **FIG. 1A****.** The system 10 includes one or more input(s) 1002, a notification generator 1004, a communication interface 1008, a reply counter 1040, a comparator 1042, a filter 1050, a product tester management module 1080, a testing interface generator 1100, a timer 1200, a time-comparator 1202, a tracker 1300, a graphic generator 1302, an image database 1304, a video generator 1310, a video database 1314, a user interface generator 1350, a testing monitoring module 1400, a test result retrieval module 1500, and an analyzer 1502. Details of these components will be described in further detail below. It should be noted that the system 10 is not limited to the example shown, and that the system 10 may have other configurations in other embodiments. For example, in other embodiments, the system 10 may not include one or more of the components shown in **FIG. 1B****.** In further embodiments, the system 10 may be implemented using multiple devices, having different respect sets of one or more of the components shown in **FIG. 1B****.**

In the illustrated embodiments, the product testers 14 have respective memberships and accounts with the party 16. For example, in order for a person to qualify as a product tester for the party 16, the person may need to go through a registration process with the system 10 to become a product tester 14. The product tester management module 1080 in the system 10 is configured to manage the various product testers 14. The product tester management module 1080 may be configured to provide a registration interface to receive information regarding a person who desires to be a product tester 14, so that the person is registered as a product tester 14 in the system 10. Each registered product tester 14 will have his / her login ID and password, which allow the product tester 14 to log into the system 10. The product tester management module 1080 may also be configured to provide training on product testing to train the person so that the person can be qualified as a product tester 14. In some embodiments, the product tester management module 1080 also manages the accounts of the various product testers 14. For example, after a product tester 14 completes a product testing project, the product tester management module 1080 may calculate a fee owed to the product tester 14 based on one or more features of the product testing project.

In some embodiments, the product tester management module 1080 also manages the accounts of the various product testers 14. For example, after a product tester 14 completes a product testing project, the product tester management module 1080 may calculate a fee owed to the product tester 14 based on one or more features of the product testing project. In one implementation, the fee owed to a product tester 14 may be calculated based on a number of tasks (steps) involved in the product testing. For example, if the product testing project involves 39 tasks, and the agreed rate between the product tester 14 and the second party 16 is $2 per task, then the fee for the product tester 14 for this project would be 39 X 2 = $78. In some embodiments, all of the product testers 14 registered with the system 10 have the same pay rate. In other embodiments, different product testers 14 may have different scores indicating their level of experiences, reliabilities, etc. In such cases, the product testers 14 may have different respective pay rates based on these metrics.

During use of the system 10, when the first party 12 has developed a product, the first party 12 informs the second party 16 that its product needs to be tested. For example, the first party 12 may send a request to the system 10, and may transmit information regarding the product to be tested to the system 10. The request and/or the information regarding the product may be received by the input(s) 1002 of the system 10. For example, if the product is a web page, the first party 12 may provide a link for the web page, product testing parameters, and product testing tasks. In some embodiments, the user interface generator 1350 in the system 10 may provide an user interface for allowing the first party 12 to define product testing parameters and product testing tasks. These information may also be received via the input(s) 1002 of the system 10. For example, the first party 12 may access an user interface provided by the user interface generator 1350 of the system 10 to generate a list of tasks for a product tester 14 to perform, and to create a list of questions corresponding to the respective tasks for the product tester to answer. In one implementation, the user interface generator 1350 is configured to generate an image of the user interface for display on a device being used by the first party 12 when the first party 12 is on-line, and has logged into an account with the second party 16.

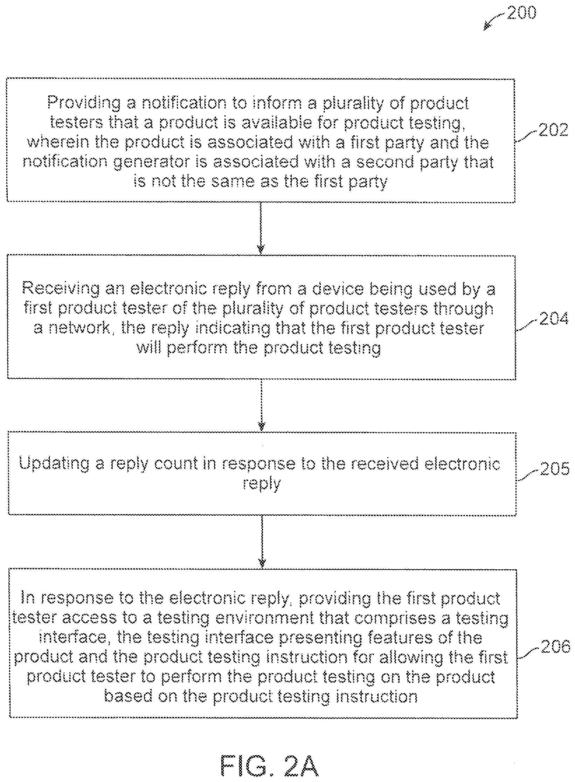

**FIG. 2A** illustrates a processor-implemented method 200 performed by the system 10 of **FIG. 1** for providing product testing. The method 200 may be described with reference to the system 10 of **FIG. 1A** and **1B****.** In response to the request from the first party 12, the system 10 provides a notification 1005 to inform a plurality of product testers 14 that a product is available for product testing (item 202). In the illustrated embodiments, the product is associated with the first party 12 and the notification generator 1004 is associated with a second party 16 that is not the same as the first party 14.

In some embodiments, the notification 1005 provided by the system 10 is for display in a web browser. For example, the product tester 14 may open a web browser on his / her device. The web browser may include an add-on feature, which allows the product tester 14 to receive the notification 1005 from the system 10. In such cases, if the product tester 14 is on-line, the product tester 14 will receive the notification 1005. On the other hand, if the product tester 14 is off-line, then the product tester 14 will not receive the notification 1005. In the illustrated embodiments, the notification 1005 is "broadcasted" by the system 10 in the sense that multiple product testers 14 will receive the notification 1005 or will have access to such notification 1005.

In other embodiments, the notification 1005 may be for display in a field created by a product testing notification application. For example, the product tester 14 may install a product testing notification application onto his / her device, which allows the product tester 14 to receive the notification 1005 from the system 10. The product testing notification application may be provided by the second party 16 for installation or downloading onto a device of a product tester 14. The device being used by the product tester 14 may be a laptop, a desktop computer, or a handheld device (e.g., an iPhone, iPad, iPad mini, tablet, etc.).

In further embodiments, the notification 1005 may be sent to a job listing agent, or a crowd-testers provider, such as crowdflower or a mechanical turk, etc.

Accordingly, as used in this specification, the term "notification" may refer to any information for informing a product tester 14, wherein such information may be sent directly to a user interface on a device being used by the product tester 14, or to a job listing agent for allowing a product tester 14 to view. The notification may actively inform the product tester 14, or may passively inform the product tester 14 (in that the notification may be posted at a location at which the product tester 14 may search or discover such notification).

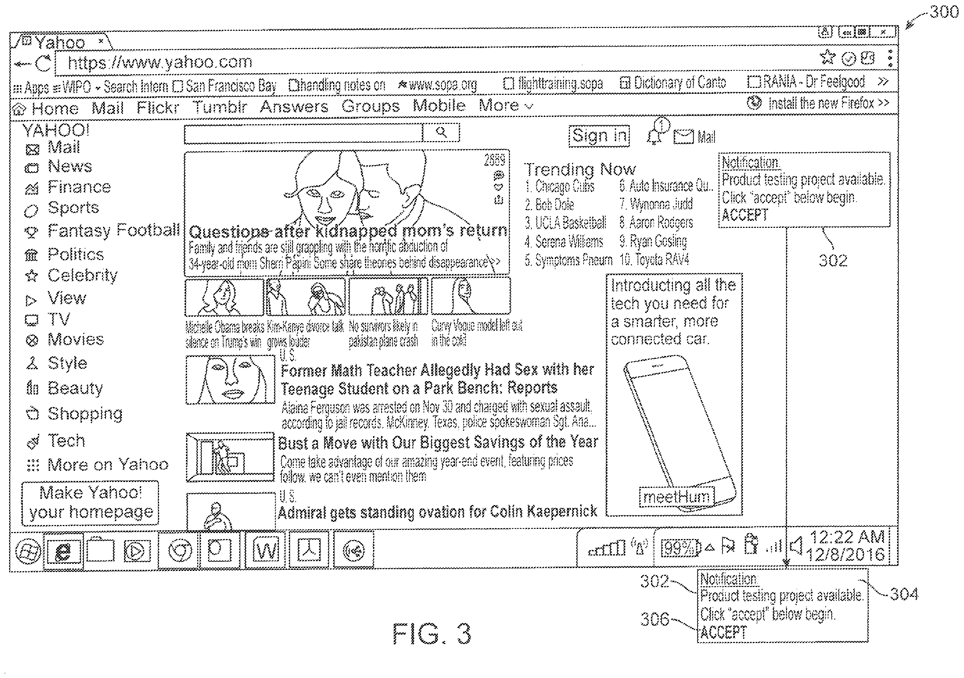

**FIG. 3** illustrates an example of a user interface 300 for providing a notification to a product tester 14. The user interface 300 includes a field 302 for displaying a notification 304 provided by the system 10, indicating that a product testing project is available. The user interface 300 also includes a feature 306 for allowing a product tester 14 to accept the product testing project.

It should be noted that the user interface 300 for providing the notification to the product tester 14 is not limited to the example described previously, and that the user interface 300 may have other configurations in other embodiments.

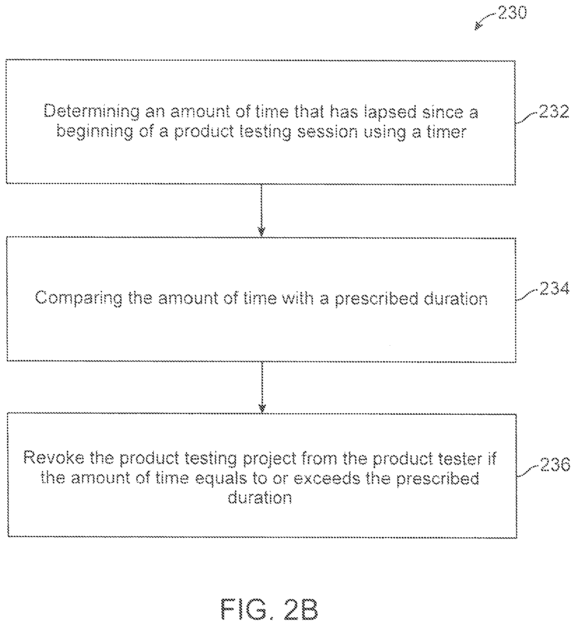

Returning to the method 200 of **FIG. 2****,** and the system 10 of **FIGS. 1A** and **1B****,** next, an electronic reply 1010 is received from a device being used by a product tester 14 of the plurality of product testers through a network (item 204). In the illustrated embodiments, item 204 may be performed by the communication interface 1008 at the system 10. The reply 1010 indicates that the product tester 14 will perform the product testing. The network transmitting the electronic reply may be any network, such as the Internet, a telecommunication network ,etc. In some cases, the electronic reply 1010 may be generated using a web browser utilized by the product tester 14. For example, the web browser on a device utilized by the product tester 14 may include an add-on feature, which allows the product tester 14 to receive the notification 1005 (e.g., a ping, a message, a posting, etc.) from the system 10, like the example shown in **FIG. 3****.** The same add-on feature may also allow the product tester 14 to provide his / her reply (for reception by the system 10) to accept or to sign up for a product testing project.

In other cases, the electronic reply 1010 may be generated using a product testing notification application utilized by the product tester 14. For example, the product tester 14 may install a product testing notification application onto his / her device, which allows the product tester 14 to receive the notification 1005 from the system 10. As discussed, the product testing notification application may be provided by the second party 16. The same product testing notification application may also allow the product tester 14 to provide his / her reply (for reception by the system 10) to accept or to sign up for a product testing project.

In further embodiments, as discussed, a product tester 14 may use crowdflower or a mechanical turk to obtain the notification 1005 regarding the product testing project. In such cases, the reply 1010 accepting the product testing project will be generated by a device using the crowdflower or mechanical turk.

As shown in the figure, the method 200 further includes updating a reply count in response to the received electronic reply (item 205). In the illustrated embodiments, item 205 is performed by the reply counter 1040 of the system 10.

In some embodiments, the method 200 may also include receiving additional electronic reply / replies 1010, keeping track with a number of replies 1010, and comparing the number of replies 1010 with a prescribed number. In some embodiments, the communication interface 1008 of the system 10 is configured to receive one or more additional electronic replies 1010 from one or more additional product testers 14 from the plurality of product testers 14 until a prescribed number of electronic replies 1010 has been reached. In response to each reply received by the communication interface 1008, the reply counter 1040 in the system 10 will increment the reply count by one. In such cases, after the communication interface 1008 received the first electronic reply 1010 from the product tester 14, the product testing project is then assigned only to the product tester 14, and not to any other product testers 14. The communication interface 1008 continues to receive additional reply until the total number of replies 1010 is equal to the prescribed number of electronic replies 1010, as determined by the comparator 1042 in the system 10. In the illustrated embodiment, the prescribed number of reply 1010 is one reply. In other embodiments, the prescribed number of replies 1010 may be more than one. For example, in some embodiments, the prescribed number of electronic replies 1010 may be three, four, five, six, or seven. In other embodiments, the prescribed number of electronic replies 1010 may two. In further embodiments, the prescribed number of electronic replies 1010 may be more than seven.

Referring to **FIG. 2****,** next, in response to the electronic reply, the system 10 then provides a testing environment that comprises a testing interface for use by the product tester 14 (item 206). In some embodiments, the testing interface may be generated by the testing interface generator 1100 in the system 10. Also, in one implementation, item 206 may be performed by the system 10 providing the testing interface for display on a device being used by the product tester 14 after the product tester 14 has accepted the product testing project. For example, the generated testing interface may be output to a network (e.g., the Internet) for transmission to the device of the product tester 14. Also, in one implementation, item 206 may be performed by the testing interface generator 1100, which opens up a virtual machine environment for presenting the testing interface for the product tester 14 in response to the product tester 14 accepting to take the product testing project.

The testing interface is configured to present features of the product and the product testing instruction for allowing the first product tester 14 to perform the product testing on the product based on the product testing instruction. In some embodiments, the product testing instruction provides a plurality of tasks for the product tester 14 to perform for testing the product. For example, in some cases, the product being tested comprises a web page, and the product testing instruction is configured to prescribe one or more actions be performed on the web page being tested.

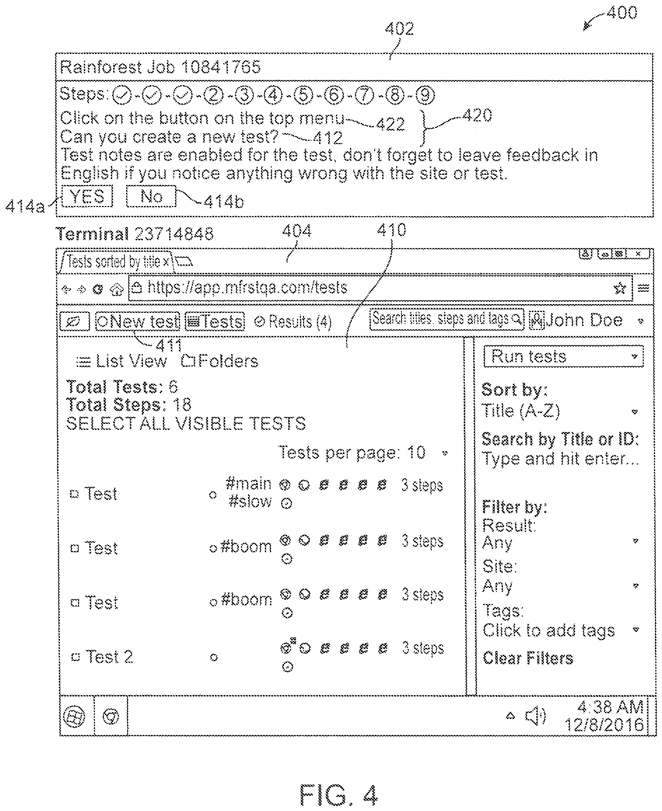

**FIG. 4** illustrates an example of a testing environment 400 having a testing interface 402 for allowing a product tester 14 to perform product testing. The testing interface 402 includes a window 404 for presenting features of the product being tested. In the illustrated example, the product comprises a web page. The window 404 may allow the product tester 14 to access the web page via a link. In response to the product tester 14 entering or clicking the link, the window 404 then presents an image of a web page 410 for allowing the product tester 14 to perform product testing thereon. Also, in the illustrated example, the web page 410 displayed in the window 404 includes one or more selectable features 411. The testing interface 402 includes a field 420 providing one or more tasks 422 for the product tester 14 to perform on the web page 410.

In some embodiments, the tasks 422 are parts of a product testing instruction. A task 422 may require the product tester 14 to perform an action on the image of the web page 410. For example, a task 422 may be to click on a tab on the web page 410, to click on a link on the web page 410, to enter a value in a field in the web page 410, to click on a box in the web page 410, etc.

As shown in **FIG. 4****,** the testing interface 402 may be configured to present a question 412 for the product tester 14 to answer after the action has been performed based on the product testing instruction. For example, the question 412 may ask the product tester 14 whether the product tester 14 sees a pop-up after selecting an object in the web page 410 being tested, whether the product tester 14 sees a new image after selecting a certain option in the web page 410, etc. In the illustrated example, the testing interface 402 also provides only two possible answers 414a, 414b ("Yes" and "No") for allowing the product tester 14 to select. Such technique reduces ambiguity in the answer provided by the product tester 14. In other embodiments, the testing interface 402 may provide more than two possible answers 414 for allowing the product tester 14 to select to answer a question baser the product tester 14 performs a task specified in the product testing instruction.

In some embodiments, if the product tester 14 selects the "No" answer to any of the product testing question, the system 10 then terminates the product testing session, and the product testing is considered completed by the product tester 14. In such cases, no further product testing tasks and no further product testing questions will be presented to the product tester 14. This is because if the product being tested has a certain feature that fails, then the product provider may want to know this right away. Also, the failed feature may impact other features of the product. Accordingly, if a feature in the product has failed the product testing, then one or more other features may fail as well. In other embodiments, instead of terminating the product testing session, the system 10 may allow the product tester 14 to continue testing the product. For example, the system 10 may allow the product tester 14 to continue with the remaining tasks in the product testing prescribed by the product testing instruction. Also, the system 10 may allow the product tester 14 to test other features of the product that are not associated with the failed feature.

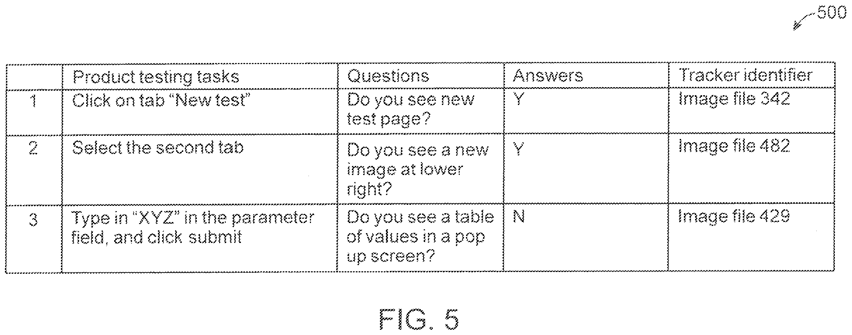

In some embodiments, the method 200 further includes storing an answer of the question in a test result file for the product being tested. As described, the answer may be a "Yes" answer or a "No" answer in response to a question provided to the product tester 14 after the product tester 14 has performed a task to test the product. Thus, in some embodiments, the answer, the question, and the associated task for testing the product may be stored in a unique data structure that associate these items together. **FIG. 5** illustrates an example of a data structure 500 for linking product testing tasks 502, respective product testing questions 504, and the corresponding answers 506 to the product testing questions 504. The data structure 500 also includes tracker identifiers 508 that identify files tracking interaction of the product tester 14 while testing the product. Each tracker identifier 508 may identify an image, a video file, or any of other interaction information that captures the interaction of the product tester 14 on the product being tested. These information are advantageous because they allow a user (from party 12 or party 16) to retroactively determine how a product tester 14 came to a conclusion based on the product tester's 14 interaction with the product being tested. The tracker identifier 508 will be described in further detail below.

In some embodiments, the testing interface 402 is configured for display on a computer screen or a laptop screen. In other embodiments, the testing interface 402 is configured for display on a hand-held device (e.g., an iPhone, iPad, iPad mini, tablet, etc.).

It should be noted that the testing interface 402 is not limited to the example discussed previously, and that the testing interface 402 may have other configurations in other embodiments.

In some embodiments, after the testing interface 402 is provided to the product tester 14, the timer 1200 in the system 10 keeps track of the duration that has lapsed since the providing of the testing interface 402. In such cases, the method 200 may further include determining (by the timer 1200) an amount of time that has lapsed since the testing interface has been provided to the product tester 14. The method 200 may also include comparing the amount of time with a prescribed duration using the time-comparator 1202. If the lapsed time has exceed a the prescribed duration (e.g., a starting deadline), and the product tester 14 has not begun performing a product testing task, then the system 10 will revoke the product testing project from the product tester 14. For example, the system 10 may terminate the product testing session being used by the product tester 14. In some embodiments, the prescribed duration (starting deadline) may be set by the system 10 to be five minutes after a product testing session has begun. In other embodiments, the prescribed duration may be set by an administrator of the system 10 to have other values, such as a duration that is more than five minutes, or less than five minutes. Accordingly in some embodiments, a method 230 of tracking a progress of a product testing session may be provided (**FIG. 2B****).** The method 230 may be a part of the method 200 in some embodiments. The method 230 includes determining an amount of time that has lapsed since a beginning of a product testing session using a timer (item 232), comparing the amount of time with a prescribed duration (item 234), and revoking the product testing project from the product tester if the determined time equals to or exceeds the prescribed duration (item 236). In some embodiments, the method 200 may also include terminating the product testing session. Also, in one implementation, item 236 may be performed by the testing interface generator 1100, which closes a virtual machine environment presenting the testing interface for the product tester 14 in response to the lapsed time meeting the prescribed duration.

In some embodiments, after the testing interface 402 is provided to the product tester 14, the method 200 further includes tracking an interaction of the product tester 14 with the web page. For example, the product tester 14 may be using his / her device (e.g., laptop, desktop, handheld device, such as a cell phone, etc.) to perform the product testing. In such cases, the tracker 1300 of the system 10 is configured to track a position of the cursor in the product tester's device as operated by the product tester 14. In some cases, if the product tester 14 is using a cell phone with a touchscreen to perform the product testing, the tracker 1300 may be configured to track a position of the finger position as applied on the touchscreen. Thus, as used in this specification, the term "cursor" is not limited to a displayed item operated using a touchpad, a mouse, or a knob, and the term "cursor" may also include non-displayed item that is associated with a movement of a finger as applied on a touchscreen.

In one implementation, the testing interface 402 may instruct the product tester 14 to click on a certain item on an image of a web page being tested. While the product tester 14 is manipulating the cursor in the web page, the tracker 1300 of the system 10 records the positions of the cursor as it appears in the web page. The system 10 may also use the graphic generator 1302 configured to generate a graphic representing the tracked movement. In some embodiments, the graphic comprises a line traversing a plurality of cursor positions. Also, the graphic may further comprise a selection identifier identifying a position in the image of the web page at which the product tester 14 performed a selection (e.g., a clicking of a button). For example, the selection may be a selection of a tab, a selection of a button, a selection of an icon, a selection of a text, or any combination of the foregoing, performed by the product tester 14.

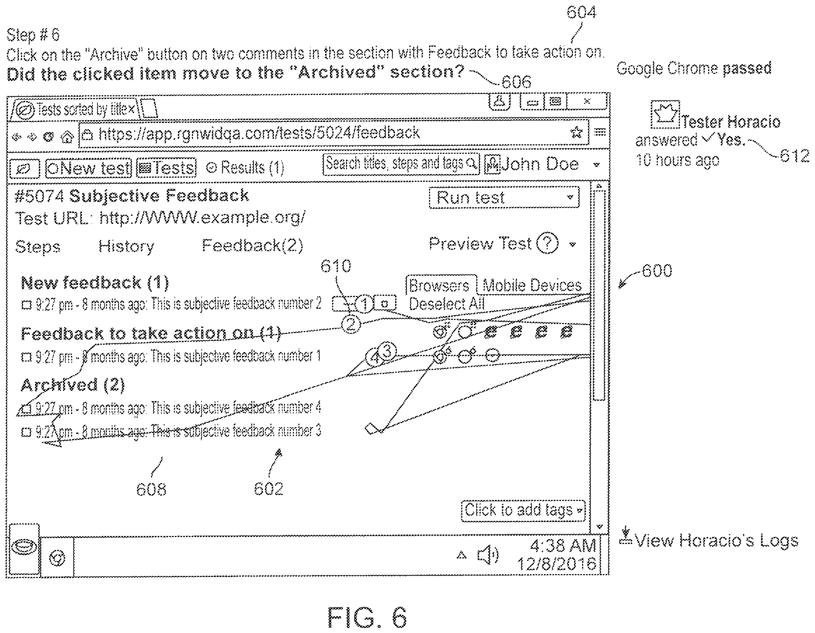

**FIG. 6** illustrates an example of an image 600 capturing an interaction of a product tester with a product being tested. As shown in the figure, the image 600 includes an image of a web page 602 being tested, the task 604 prescribed by the product testing instruction, and the question 606 corresponding to the task 604. In the example, the task 604 instructs the product tester 14 to click on the "Archive" button, and the question 606 asks the product tester 14 whether the clicked item moved to the archived section. The image 600 also shows a graphic 608 generated by the graphic generator 1302. The graphic 608 is in a form of a line, which indicates where the product tester 14 has moved the cursor while performing the task 604. The graphic 608 also includes a plurality of circles 610 (example of selection identifiers) identifying a position in the image of the web page at which the product tester 14 has clicked on a button.

In some embodiments, the method 200 may further include storing the electronic image 600 in a non-transitory medium 1304 **(****FIG. 1B****).** The non-transitory medium 1304 is illustrated as an image database, but in other embodiments, the non-transitory medium 1304 may be any memory or storage device. The image 200 includes the image of the web page 602 and the graphic 608 superimposed with the image of the web page 602. In one implementation, for a given product testing task, the system 10 is configured to generate positional data regarding the position of the cursor as the product tester 14 interacts with the web page 602 to perform the assigned task. The positional data may include a position (e.g., X and Y coordinates) of the cursor. The positional data may be later used by the graphic generator to generate the graphic 608. For example, all of the positional data may be plotted to create the line shown in the example of the graphic 608 in **FIG. 6****.** Also, in some embodiments, the system 10 may also generate timing data that are associated with the respective positions of the cursor. For example, cursor position (X1, Y1) may occur at t1, and cursor position (X2, Y2) may occur at t2. Thus, the system 10 may generate the timing data t1, t2, etc., and store such timing data in association with the respective cursor positions in the non-transitory medium.

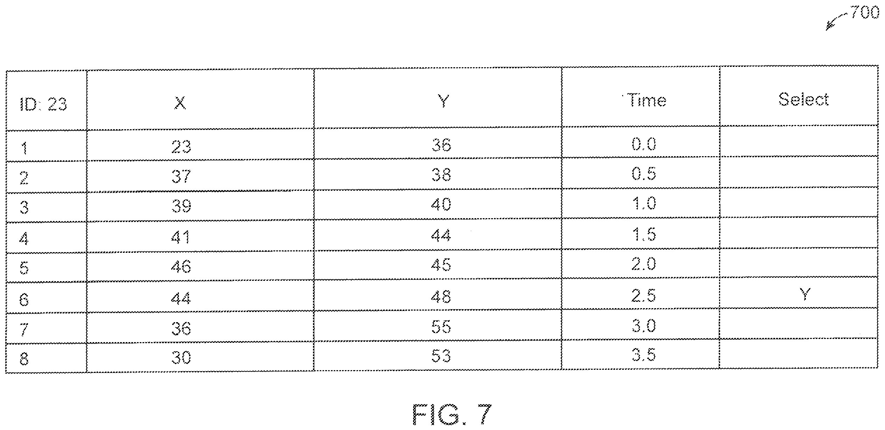

**FIG. 7** illustrates an example of a data structure 700 for storing cursor position data in association with timing data. The data structure 700 includes two columns for positional values in the x-coordinate and y-coordinate, respectively.

The data structure 700 also includes a column for indicating whether the product tester 14 made a selection (e.g., by clicking a button) at a certain cursor position. In some embodiments, the data structure 700 may be used by the graphic generator 1302 to create the graphic 608 that is associated with an image of a web page being tested. In particular, the positional values in the data structure 700 may be used to create the lines in the graphic 608, and the select indicator(s) in the data structure 700 may be used to create the circle(s) 610 representing the position(s) at which the product tester 14 has made a selection. In some embodiments, the data structure 700 may be stored in the non-transitory medium 1304.

Also, in some embodiments, the data structure 700 may be linked with a certain tracker identifier in the data structure 500 of **FIG. 5****.** For example, the data structure 700 with the identifier "23" may contain data for creating the graphic 608 in the image file 342 in the data structure 500. The image file 342 may contain an image of the web page being tested. In such cases, the data structure [Image file 342; ID=23] may be used to link the data structure 700 with the image file 342. Accordingly, when the system 10 presents an image for indicating a tracked action of a product tester 14 for the task No. 1 listed in the data structure 500, the system 10 will use the above data structure to look up the data structure 700 with the ID "23". The data in the data structure 700 are then used to generate the graphic 608 for presentation with an image of the web page.

As shown in **FIG. 7****,** the data structure 700 may also include timing data indicating the respective times at which the positions of the cursor occurred. The timing data is advantageous because it may allow the graphic 608 to be presented in a form of a video. For example, the video generator 1310 may utilize the data structure 700 to create a video showing a changing of the position of the cursor over time. Thus, the video will indicate a tracked interaction of the product tester 14 with the web page being tested. In some embodiments, the video provided by the video generator 1310 may include a moving cursor. In other embodiments, the video provided by the video generator 1310 may include a growing line representing a collection of positional points by the cursor as the cursor is moved across the web page. In some embodiments, the video may be stored in a non-transitory medium 1314 **(****FIG. 1B****).** The non-transitory medium 1314 is illustrated as a video database, but in other embodiments, the non-transitory medium 1314 may be any memory or storage device. Also, in other embodiments, instead of having separate non-transitory media 1304, 1314 as image database and video database, the non-transitory media 1304, 1314 may be integrated as a single database.

The graphic 608 and the image of the web page being tested may be provided by the system 10 to a user associated with the first party 12. For example, in some embodiments, the user interface provided by the user interface generator 1350 may be configured to output an image and/or a video having the graphic 608 and the image of the web page for viewing by the user of the system 10. Such image and/or video may be provided as a part of a test result file so the user can see how the product tester 14 came to a certain product testing conclusion based on the interaction with the web page tested.

In some embodiments, the image and/or the video may be stored in association with the corresponding product testing task defined in the product testing instruction. In particular, the image and/or the video is for tracking the interaction of the product tester 14 while the product tester 14 is performing a certain task prescribed in the product testing instruction. Accordingly, each of the task prescribed to be performed by the product tester 14 will have a corresponding image and/or video tracking the interaction of the product tester 14 with the web page being tested. For example, if a product testing project has 28 tasks (steps), after the product tester 14 has finished the product testing project, the system 10 will have generated 28 images and/or 28 videos for the respective 28 tasks.

In some embodiments, all of the 28 images and/or the 28 videos in the example may be provided, or made available, to the user who is associated with the first party 12 (the provider of the product). In other embodiments, only one image and/or one video may be provided, or made available, to the user who is associated with the first party 12. For example, if a certain task in the product testing results in a "failed" result for the product testing, then the system 10 may provide only the image and/or only the video associated with the failed task. This may be advantageous because the user may not be concerned with tasks that have "pass" status, but may be more interested in viewing results for the task that results in a "failed" status. Furthermore, in some embodiments, the system 10 may store only the image and/or only the video that is associated with a failed task, and may delete other images and videos for other tasks that have "pass" status after the product testing project is completed or after the product testing project is completed for a certain pre-determined duration.

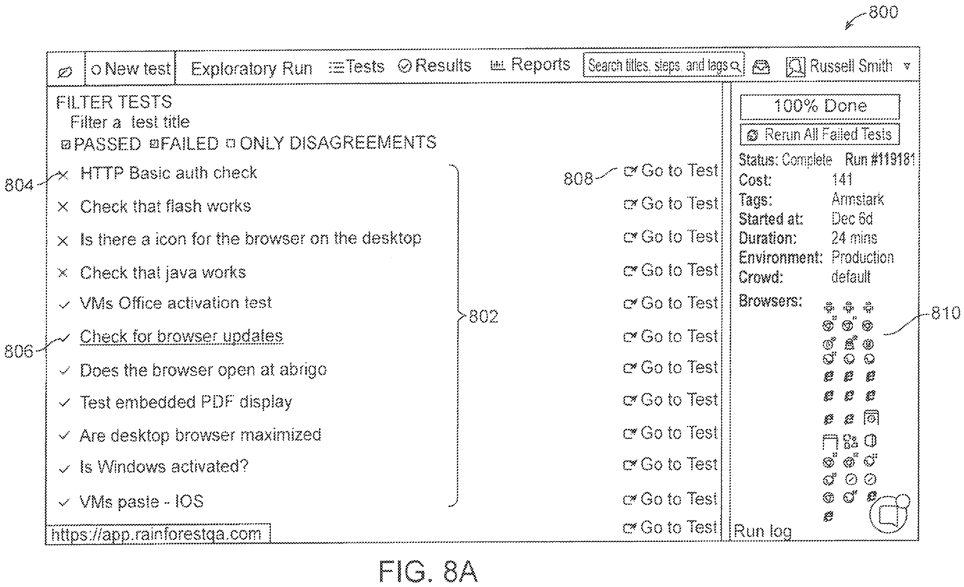

**FIG. 8A-8C** illustrates an example of a report 800 summarizing a result of a product testing. In some embodiments, the system 10 is configured to gather information from the finished product testing by one or more product testers 14, and generate the report 800 based on the gathered information. In the illustrated example, the report 800 is for a certain product that has been tested by the product testers 14. The report 800 includes a list of product testing tasks 802 performed by the product testers 14. The tasks 802 in the report 800 are the same tasks created (using the user interface provided by the user interface generator 1350) by the user associated with the first party 12 that provides the product for product testing. The report 800 also includes failed test identifier(s) 804 and passed test identifier(s) 806 next to different respective tasks. A task with a failed test identifier 804 indicates that the product testing failed when the product tester(s) performed that task. A task with a passed test identifier 806 indicates that the product testing passed when the product tester(s) 14 performed that task.

As shown in **FIG. 8A****,** the report 800 also includes an object 808 next to each of the tasks, which when selected by the user, will provide further details about the product testing on that specific task. The report 800 also includes a list of browsers 810 in which the product testing of the product has been performed.

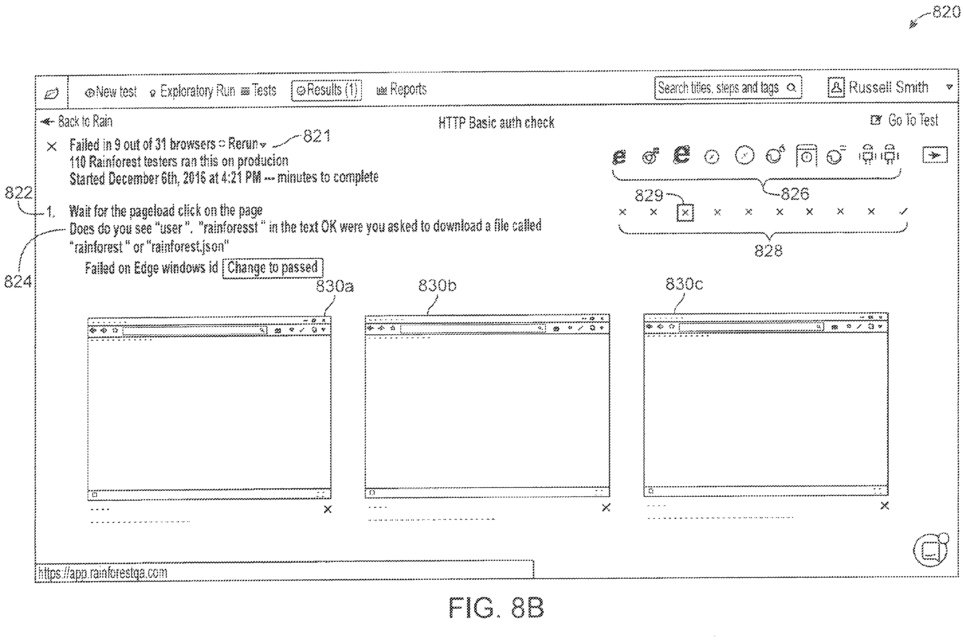

In some cases, the user viewing the report 800 may be interested in viewing details of the product testing for a certain task. In such cases, the user may select the corresponding object 808 next to the task 802. In response, the system 10 may present the report 820 shown in **FIG. 8B** for the user. The report 820 is for a certain task performed during the product testing. As shown in the figure, the report 820 includes a summary 821 of the product testing for that task. In the illustrated example, the summary 821 indicates that the specific task in question failed when the product testers 14 perform the product testing in 9 out of 31 browsers. The report 820 also shows the corresponding task 822 performed by the product testers 14 when the product testing failed, and the corresponding question 824. The 9 browsers in which the performance of the task failed are shown by the browser icons 826. The report 820 also includes pass/fail indicator 828 next to the different respective browser icons 826. In the example, a failed indicator 828 next to a browser icon 826 indicates that the performance of the task failed when the product testers 14 performed the task in the type of browser represented by the browser icon 826.

Also, in the illustrated example, the user viewing the report 820 has selected one of the pass/fail indicators 828 for a certain browser, as represented by the selector graphic 829. Accordingly, the report 820 displays three images 830a-830c that were captured when three respective different product testers 14 performed the task 822 in the browser type selected. From the images 830, the user viewing the report 820 can see what were on the product testers' 14 screen when they performed that specific task that result in a "failed" status.

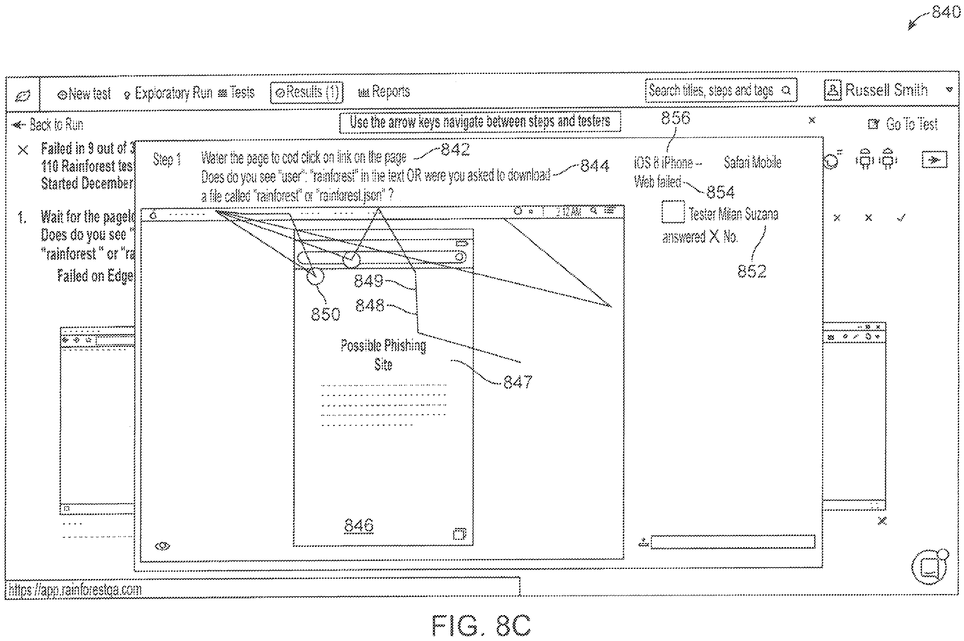

The user viewing the report 820 can select one of the images 830a-830c to see more detail. For example, when the user selects one of the images 830a-830c, the system 10 may provide a report 840 shown in **FIG. 8C** to the user. The report 840 includes a description of the task 842, and the corresponding product testing question 844. The report 840 also includes an image 846 that includes an image 847 of the web page tested, and a graphic 848. The graphic 848 includes a line 849 that tracks the position of the cursor when the product tester 14 interacted with the web page, and selection identifiers 850 indicating the positions where the product tester 14 made selections (e.g., clicked a button). The features in the image 846 may be provided by the graphic generator 1302 of the system 10, as similarly discussed with reference to **FIG. 6****.** Thus, image 846 allows the user to retroactively view the interaction of the product tester 14 with the web page while performing the task 842. In other embodiments, instead of a fixed image 846, the system 10 may provide a video showing a movement of the cursor and selection(s) (e.g., clicking of button) by the product tester 14.

As shown in the figure, the report 840 further includes an identifier of the product tester 14 who performed the product testing task. The identifier may be the actual name of the product tester 14 or other identifier that identifies the product tester 14. Also, in some embodiments, the identity of the product tester 14 may be kept confidential and may not be presented by the system 10 to the user.

The report 840 further includes a browser identifier 856 identifying the type of browser in which the task was conducted by the product tester 14, and a pass / fail indicator 854 indicating whether the task in question failed or passed during the product testing.

In some embodiments, the test result reports 800, 820, 840 may be generated using the test result retrieval module 1500 in the system 10. The test result retrieval module 1500 gather information regarding the product testing, and create the reports 800, 820, 840 for viewing by the user. The reports 800, 820, 840 may be presented through an user interface created by the user interface generator 1350 of the system 10. For example, in some embodiments, the user interface generator 1350 may generate and provide an user interface for use by an administrator of the system 10. In such cases, the reports 800, 820, 840 may be provided for viewing by the administrator through the user interface. Alternatively or additionally, the user interface generator 1350 may generate and provide an user interface for use by a user associated with the first party 12 providing the product for product testing. In such cases, the reports 800, 820, 840 may be provided for viewing by the user through the user interface.

It should be noted that the test result reports 800, 820, 840 are not limited by the examples described previously, and that the system 10 may provide test result report(s) having different configurations in different embodiments. For example, in other embodiments, the reports 800, 820, 840 may have fewer information than those described in the above example.

Also, in other embodiments, instead of providing reports associated with all of the product testers 14 for each task, the system 10 may consolidate the product testing results from the multiple product testers 14, and provide a consolidated product testing report to the user. For example, the analyzer 1502 in the system 10 may employ a logical algorithm to determine whether a certain product testing result from a product tester 14 is reliable or not. If the testing result is considered as non-reliable, the analyzer 1502 then disregards that particular product testing result.

As another example, the analyzer 1502 may compare two product testing results from two different product testers 14. If the two product testing results indicate the same conclusion (e.g., pass or fail), then the analyzer 1502 may determine the product testing results as reliable. In such cases, the system 10 may simply report to the user that the particular task in question has a pass or fail status without informing the user the number of product testers 14 performed the testing.

In some cases, if there are three product testers 14 for a particular task, the analyzer 1502 may pick a result (e.g., pass or fail) that has the majority vote. For example, if two product testers 14 performing the task provide a "Yes" answer to the corresponding question, and the third product tester 14 provides a "No" answer, then the analyzer 1502 will pick the "Yes" answer and may determine that the testing of the task has a "pass" status. On the other hand, if two product testers 14 performing the task provide a "No" answer to the corresponding question, and the third product tester 14 provides a "Yes" answer, then the analyzer 1502 will pick the "No" answer and may determine that the testing of the task has a "fail" status.

Accordingly, it is advantageous to have three product testers 14 assigned for a product testing project, and to have only two mutually exclusive answers (e.g., "Yes" and "No") as possibilities for answering the corresponding product testing question. This is because such arrangement allows the analyzer 1502 to be able to decide on a final product testing result even if a product testing result from one product tester 14 contradicts another product testing result from another product tester 14. Also, assigning the same product testing project to multiple product testers 14 allows different results to be compared for detection of non-reliable result. However, in other embodiments, more or fewer than three product testers 14 may be assigned for a product testing project, as discussed, and the number of answers may be more than two. For example, in other embodiments, the answers may be in multiple choice formats with three or more choices.

In some embodiments, the system 10 may be configured to provide a user interface for allowing a user to override a product testing result. For example, the user interface providing the report 800/820/840 may also provide a control for allowing a user to change a product testing result. If a product testing result indicates that a particular task has a "pass" status, the user may utilize the control to change the status from "pass" to "failed". Alternatively, if a product testing result indicates that a particular task has a "failed" status, the user may utilize the control to change the status from "failed" to "pass".

It should be noted that the analyzer 1502 of the system 10 is not limited to comparing product testing results. In other embodiments, the analyzer 1502 may also perform other analyses to determine different user metrics associated with the product testers 14 and/or different testing metrics relating to the reliability of the test results. For example, in some embodiments, the analyzer 1502 may compare the images (which tracked the actions of the product testers 14) stored in the image database 1304 to determine whether the three images are similar or not. If all three product testers 14 perform the same action prescribed by the task of the product testing instruction, the graphics representing the movements of the cursors in the three images may have some similar features. For example, if the product testing task requires the product testers 14 to move the cursor to a link and click on the link, the graphics representing the movement of the cursors should all include one or more selection identifiers at the link. If one of the graphics indicate that there is no selection of the link, the analyzer 1502 may then determine that the product testing result by the corresponding product tester 14 is not reliable. This may be the case even if this product tester 14 provided the same "Yes" or "No" answer to reach the same conclusion as that of the other two product testers 14.

As another example, during a product testing, the testing monitoring module 1400 of the system 10 may gather some intelligence regarding the performance of the product testers 14. After the product testing is finished, the analyzer 1502 may then retrieve the information from the testing monitoring module 1400 and perform further analysis based on the information. For example, the testing monitoring module 1400 may determine an amount of time for each product tester 14 to perform a certain task. Thus, after the product tester 14 finishes the product testing project, the testing monitoring module 1400 will have multiple time values for different respective tasks prescribed in the product testing instruction and performed by that product tester 14. The testing monitoring module 1400 also does the same for the other two product testers 14. After all three product testers 14 have finished the product testing, the analyzer 1502 may then compare the three time values associated with the respective three product testers 14 for a given task, and determine if any of the product testing results for that task from the three product testers 14 is unreliable. For example, if a certain task takes a first product tester 14 to complete in 30 seconds, takes a second product tester 14 to complete in 37 seconds, and a third product tester 14 to complete in 4 seconds, then then analyzer 1502 may determine that the product testing result from the third product tester 14 is unreliable because the other two time values are closer to each other, and the third time value is different from both of the first two time values.

As a further example, when the system 10 provides the task for the product testers 14 to perform based on the pre-determined product testing instruction, the system 10 may insert one or more questions specifically designed to test the reliability of the product testers 14. For example, the system 10 may ask the product tester 14 a simple mathematical question, such as, "what is 14+6?" that is completely unrelated to the nature of the product being tested. If the product tester 14 is actively paying attention while performing the product testing, the product tester 14 is most likely to answer this question correctly. On the other hand, if the product tester 14 is not paying attention while performing the product testing, the product tester 14 may answer this question incorrectly, thereby indicating that the product testing result from this product tester 14 may be unreliable. This technique also has the benefit of detecting certain product tester 14 who may be carless, reckless, or who pretends to be performing the product testing.

Accordingly, in some embodiments, the testing monitoring module 1400 may be configured to compare an answer provided by the product tester 14 with an expected answer. If the answer provided by the product tester 14 matches the expected answer, then the testing monitoring module 1400 may determine that the product testing result by that product tester 14 is reliable. On the other hand, if the answer provided by the product tester 14 does not match the expected answer, then the testing monitoring module 1400 may determine that the product testing result by that product tester 14 is not reliable.

The testing monitoring module 1400 may also perform other functions to monitor a progress of the product testing. For example, the testing monitoring module 1400 may be configured to determine a percentage of the product testing completed, a duration spent by the product tester 14 on the product testing, a number of steps taken by the product tester 14, time wasted by the product tester 14, time lapsed before a link is clicked by the product tester 14, etc.

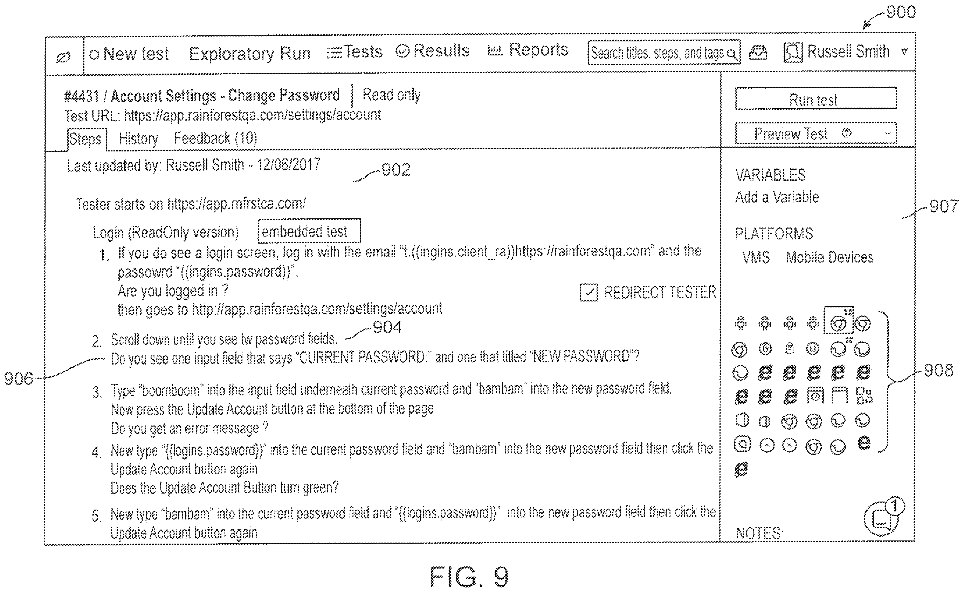

As discussed, the user interface generator 1350 is configured to provide an interface for a user to generate tasks for product testing and to define product testing parameters. **FIG. 9** illustrates an example of a user interface 900 for allowing a user to generate tasks for product testing and to define product testing parameters. The user may be associated with the first party 12 providing the product for product testing, and/or a person associated with the second party 16 providing the system 10. The user interface 900 may be generated and provided by the user interface generator 1350 in the system 10 in some embodiments. In one implementation, after the product provider (first party 12) has registered with the system 10, a user at the first party 12 may then log into the system 10 (e.g., using user ID and password). After the user has logged into the system 10, the user interface generator 1350 of the system 10 may then provide the user interface 900 for the user. In some cases, there may be multiple different product providers (different first parties 12) providing different products for product testing. In such cases, each of the parties 12 will have its own unique set of user ID and password.

As shown in the figure, the user interface 900 includes a section 902 for allowing a user to create product testing tasks 904 and corresponding product testing questions 906. Each product testing task 904 prescribes a product tester 14 to perform an action on the product being tested. Each corresponding question 906 asks the product tester 14 to confirm whether a certain event occurs or not based on the action performed by the product tester 14 in accordance with the assigned task. Accordingly, each of the product testing tasks 904 and each of the product testing questions 906 are designed by the user to test specific features in the product. The user may use the user interface 900 to add, delete, edit, and move task(s) 904 and question(s) 906.

The user interface 900 also includes a section 907 having a plurality of platform / browser icons 908 for selection by the user creating the product testing tasks. Each of the platform / browser icons 908 represents a type of platform or browser in which the web page is desired to be tested. If the user wants the web page to be tested under 34 different types of platform / browser, for example, the user can select the 34 corresponding platform / browser icons 908 to prescribe such testing parameters. By means of non-limiting examples, the platform / browser icons 908 may identify Google Chrome, different versions of Chrome, different versions of Mozilla Firefox, different versions of Microsoft Internet Explorer, different iOS for different versions of iPhone, different versions of Safari, different versions of Android mobile browsers, different versions of iPhone 6 mobile browsers, different versions of Microsoft Office, etc.

Furthermore, in some embodiments, the user interface 900 may allow the user to prescribe how to test an application on a mobile device (e.g., iPhone, iPad, tablet, etc.). For example, the user may prescribe that a product testing be performed on a certain type of mobile device by using the mobile device to launch a browser to go to a website. Alternatively, the user may prescribe that the product testing be performed using mobile-native-device (through an actual mobile device) or mobile-simulator (simulated mobile environment).

In some embodiments, the system 10 is configured to package each product testing under each selected platform / browser as one product testing project (job). Following the above example in which the user has selected 34 different types of platform / browser for testing the product, and assuming that each product testing project is desired to be performed by three product testers 14, the system 10 will then generate 3 X 34 = 102 product testing projects. These 102 product testing projects will then be notified to the product testers 14 based on the notification 1005 provided by the notification generator 1004.

Also, in some embodiments, the user designing the product testing instruction may group multiple related web pages under one product testing project. In other embodiments, the product being tested may have multiple web pages, and the user may divide the product into different features for different product testing projects.

In some embodiments, after the user has created the product testing tasks and product testing parameters using the user interface 900, the user may save these information to generate a product testing instruction file. The product testing instruction file may be saved in a non-transitory medium (e.g., the product testing instruction database 1600) at the system 10. When the user determines that the product is ready for product testing, the system 10 is notified, and the notification generator 1004 of the system 10 then provides the notification 1005 to inform the product testers 14 that the product testing project is available, as discussed. When a product tester 14 has accepted the product testing project, the testing interface generator 1100 of the system 10 then provides a testing interface, along with the tasks and questions defined in the product testing instruction (stored in the database 1600) for the product tester 14 to conduct the product testing. Also, as discussed, in some embodiments, the system 10 may insert one or more questions into the product testing instruction specifically designed to test the reliability of the product testers 14. For example, the system 10 may ask the product tester 14 a simple mathematical question, such as, "what is 14+6?" that is completely unrelated to the nature of the product being tested, and that is designed to determine reliability of the product testing result.

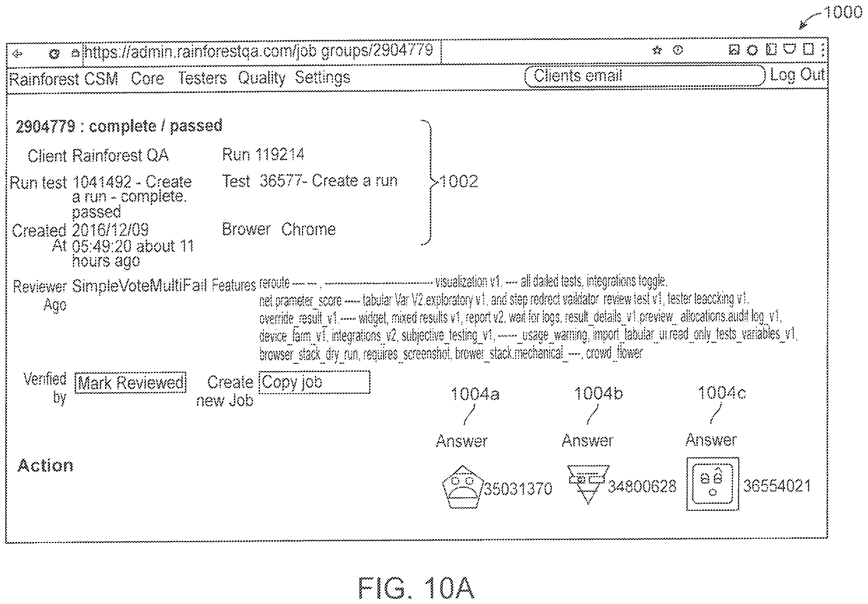

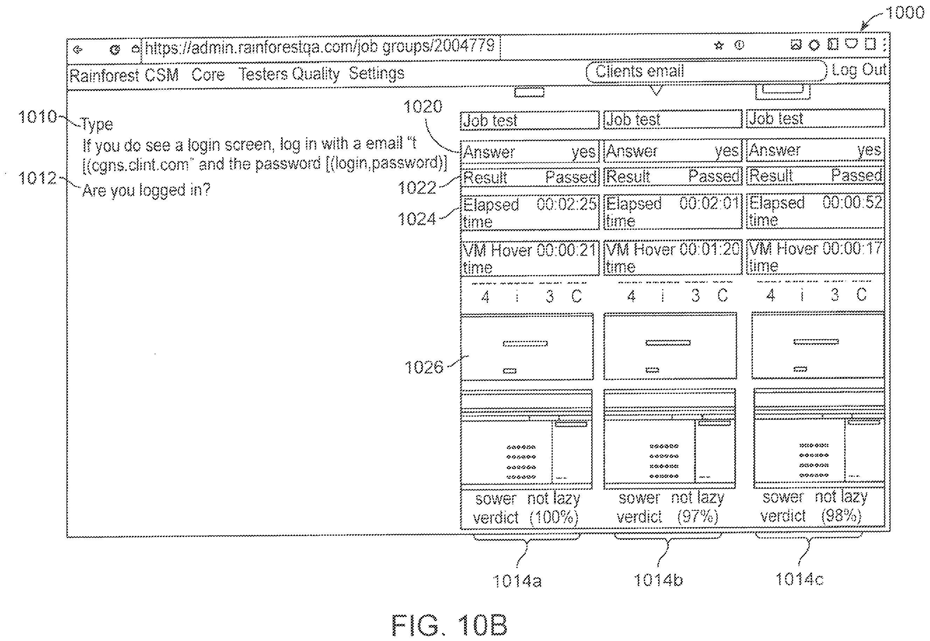

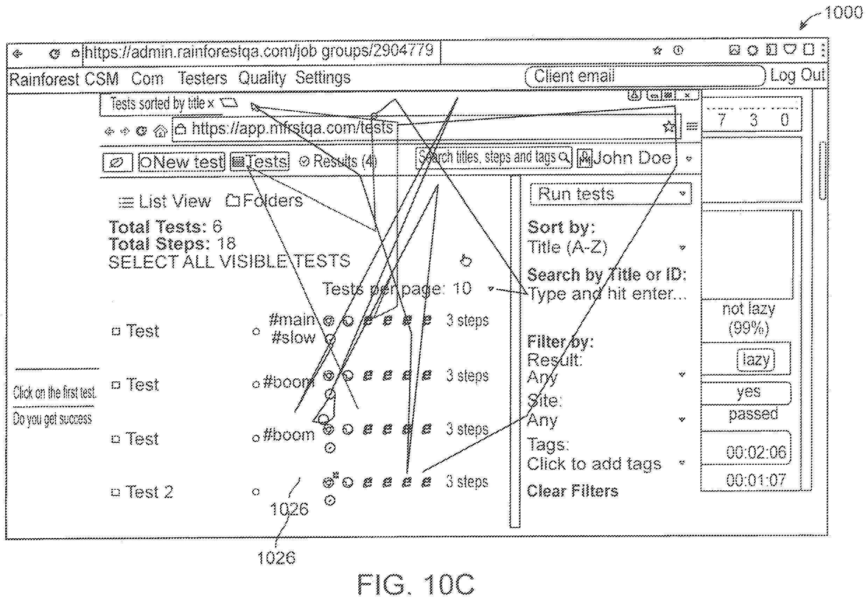

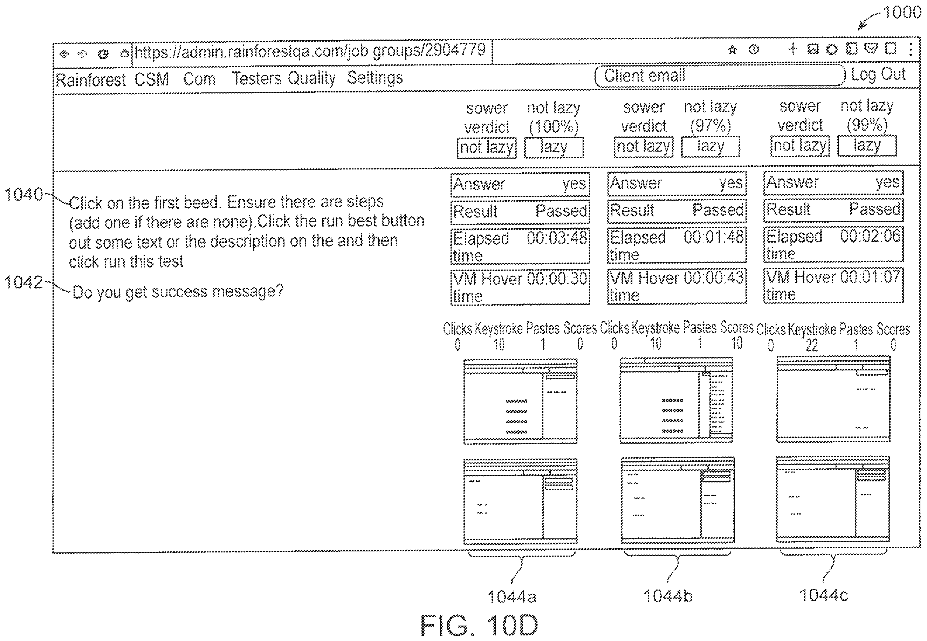

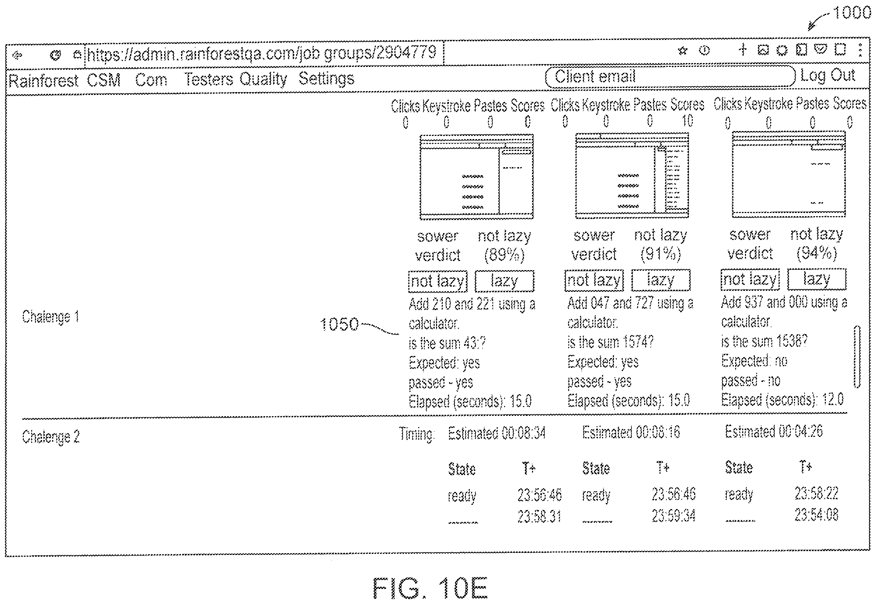

In some embodiments, the system 10 may be configured to provide an administrative product testing report for use by personnel at the second party 16. Such report provides a user at the second party 16 a detailed view of all of the tasks in a product testing. The report may be generated using the test result retrieval module 1500 (which gathers and compiled all of the relevant information), and provided to the user via an user interface generated by the user interface generator 1350. **FIGS. 10A-10E** illustrate an example of a report 1000 that is for viewing by a user at the second party 16. The report 1000 includes data 1002 regarding the product testing performed, including name of client (product provider), product testing identification, type of platform / browser in which the product testing was conducted, etc. The report 1000 also includes the identifications 1004a-1004c of three product testers 14 who performed the product testing. The report 1000 also includes a summary of the product testing organized by tasks. For example, as shown in **FIG. 10B****,** the report 1000 includes a section that provides the product testing task 1010 and its corresponding product testing question 1012. The report 1000 also includes respective results 1014a-1014c associated with the respective product testers 14. Each result 1014 indicates the product tester's 14 answer 1020 to the product testing question, a pass/fail indicator 1022 indicating whether the performance of the task passes or not, a time value 1024 indicating an amount of time it took for the product tester 14 to complete the task 1010, and an image 1026 that tracked the action of the product tester 14 while performing the task 1010. The image 1026 may be generated by the graphic generator 1302 as similarly discussed previously. In some cases, the user may click on the image 1026, and the system 10 may then provide a more detailed view of the image 1026 (**FIG. 10C****).** The image 1026 includes a graphic that indicates the action of the product tester 14 performed during the product testing, as similarly discussd. As shown in **FIG. 10D****,** the report 1000 may also include respective results 1044a-1044c associated with the respective product testers for a different task 1040, which has a corresponding product testing question 1042. Furthermore, as shown in **FIG. 10E****,** the report 1000 may also include the inserted questions 1050 for the respective product testers 14 that tested the reliability of the product testing results.

As discussed, in some embodiments, the system 10 may be configured to provide a user interface for allowing a user to override a product testing result. For example, the user interface providing the report 1000 may also provide a control for allowing a user (e.g., an administrator, or a personnel associated with the second party 16, etc.) to change a product testing result. If a product testing result indicates that a particular task has a "pass" status, the user may utilize the control to change the status from "pass" to "failed". Alternatively, if a product testing result indicates that a particular task has a "failed" status, the user may utilize the control to change the status from "failed" to "pass".

The system 10 of **FIG. 1B** will now be described in further detail. The system 10 includes one or more input(s) 1002 for receiving a product testing request, information about the product, and product testing instruction. The system 10 also includes a notification generator 1004 configured to generate a notification 1005 to inform a plurality of product testers 14 that a product is available for product testing. As discussed, in some embodiments, the product is associated with the first party 12 developing the product, and the notification generator 1004 is associated with the second party 16 that is not the same as the first party 12.

In some embodiments, the notification 1005 is for display in a web browser. For example, the product tester 14 may open a web browser on his / her device. The web browser may include an add-on feature, which allows the product tester 14 to receive the notification 1005 from the system 10. In other embodiments, the notification 1005 may be for display in a field created by a product testing notification application. For example, the product tester 14 may install a product testing notification application onto his / her device, which allows the product tester 14 to receive the notification 1005 from the system 10.

In further embodiments, the notification may be transmitted to crowdflower or a mechanical turk.

The system 10 also includes a communication interface 1008 configured to receive an electronic reply 1010 from a device 1020 being used by a first product tester 14 of the plurality of product testers, the reply 1010 indicating that the first product tester 14 will perform the product testing. In some embodiments, the communication interface 1008 and the one or more input(s) 1002 may be integrated.

In some cases, the electronic reply 1010 may be generated using a web browser utilized by the product tester 14. For example, as similarly discussed, the web browser on a device utilized by the product tester 14 may include an add-on feature, which allows the product tester 14 to receive the notification from the system 10. The same add-on feature may also allow the product tester 14 to provide his / her reply (for reception by the system 10) to accept or to sign up for a product testing project.

In other cases, the electronic reply 1010 may be generated using a product testing notification application utilized by the product tester 14. For example, as also similarly discussed, the product tester 14 may install a product testing notification application onto his / her device, which allows the product tester 14 to receive the notification from the system 10. The same product testing notification application may also allow the product tester 14 to provide his / her reply (for reception by the system 10) to accept or to sign up for a product testing project.

As similarly discussed, in other embodiments, the electronic reply may be generated by a device that is using crowdflower or a mechanical turk.

In some embodiments, the system 10 may also include a reply counter 1040 configured to keep track with a number of replies 1010, and a comparator 1042 configured to compare the number of replies 1010 with a prescribed number. In some embodiments, the communication interface 1008 is configured to receive one or more additional electronic replies from one or more additional product testers 14 from the plurality of product testers 14 until a prescribed number of electronic replies has been reached. In response to each reply received by the communication interface 1008, the reply counter 1040 will increment by one. The communication interface 1008 continues to receive additional reply until the total number of replies is equal to the prescribed number of electronic replies, as determined by the comparator 1042. In the illustrated embodiment, the prescribed number of replies is one reply. In other embodiments, the prescribed number of replies may be more than one. For example, in some embodiments, the prescribed number of electronic replies may be three, four, five, six, or seven. In other embodiments, the prescribed number of electronic replies may two. In further embodiments, the prescribed number of electronic replies may be more than seven.

In some embodiments, the system 10 may further include a filter 1050 configured to select the plurality of product testers 14 from a list of available product testers 14 for providing the notification. For example, by means of non-limiting examples, the filter 1050 may be configured to select the plurality of product testers based at least in part on respective scores of the plurality of product testers, respective ages of the plurality of product testers, respective language skills of the plurality of product testers, respective locations of the plurality of product testers, respective age groups of the plurality of product testers, respective industry expertise of the plurality of product testers, or any combination of the foregoing. Also, in one example, if a product is desired to be tested by individuals who can read Italian, the filter 1050 may then perform filtering to obtain a list of all product testers 14 who can read Italian. In such cases, the notification 1005 may be provided by the notification generator to only the product testers 14 who can read Italian.

The system 10 further includes a testing interface generator 1100 configured to generate a testing interface for use in a testing environment. The testing interface may be the testing interface described with reference to **FIG. 4****.** In other embodiments, the testing interface may have other configurations. As similarly discussed, the testing interface is configured to present features of the product and product testing instruction for allowing the first product tester 14 to perform the product testing on the product based on the product testing instruction. The product testing instruction in the testing interface is configured to provide a plurality of tasks for testing the product. For example, the product testing instruction may prescribe one or more actions be performed by the product tester 14 on a web page being tested. In some embodiments, the testing interface is configured for display on a hand-held device (e.g., an iPhone, iPad, iPad mini, tablet, etc.). In other embodiments, the testing interface is configured for display on a computer screen or a laptop screen.

In some embodiments, the product testing instruction may be created by a user through an user interface provided by the user interface generator 1350. The user creating the product testing instruction may be associated with the first party 12 providing the product for testing, or may be associated with the second party 16. The user interface allows the user to create multiple product testing tasks, and multiple corresponding product testing questions, to test a product. In some cases, the product includes a web page, and the user interface allows the user to select one or more platforms / browsers in which to test the web page. The product testing instruction may be stored in the product testing instruction database 1600.

In some embodiments, the user interface generator 1350 may be configured to provide a first product tester 14 access to a testing environment for allowing the first product tester 14 to perform product testing on a product based on the product testing instruction. The user interface generator 1350 may also be configured to provide a second product tester 14 access to another testing environment for allowing the second product tester 14 to perform another product testing on the same product based on the same product testing instruction. In one implementation, the user interface generator 1350 may provide different virtual environments for different respective product testers 14. Accordingly, different product testers 14 may perform the product testing on different respective virtual machines that provide the testing interfaces for testing the product.

Also, in some embodiments, the testing interface is configured to present an image of a web page (e.g., a web page being tested), and the product testing instruction is configured to instruct the first product tester 14 to perform an action on the image of the web page being tested. The testing interface may further be configured to present a question for the first product tester 14 to answer after the action has been performed based on the product testing instruction. The system 10 may further include a non-transitory medium for storing the product tester's answer to the question in a test result file.

In some embodiments, the system 10 also includes a timer 1200 that keeps track of the duration that has lapsed since the testing interface 402 was provided to the product tester 14. The system 10 also includes a time-comparator 1202, which compares the lapsed time with a prescribed threshold. If the lapsed time has exceeded the prescribed threshold and the product testing is not completed by the product tester 14, then the system 10 will revoke the product testing project from the product tester 14. For example, the system 10 may terminate the product testing session being used by the product tester 14. In some embodiments, in response to the revoked product testing project from the product tester 14, the system 10 will update the reply counter 1040 (e.g., by subtracting the total count by one) to indicate that a slot for the product testing project is available (due to the product testing project being released back to the pool of product testers 14 for acceptance). If another product tester 14 submits a reply to take the slot for the product testing project, the product testing project (which was not completed by the previous product tester 14) is then assigned to this other product tester 14.

As shown in **FIG. 1B****,** the system 10 also includes a tracker 1300 configured to track an interaction of the first product tester 14 with the product. In some embodiments, the product may be a web page, and the tracker 1300 is configured to track an interaction of the first product tester 14 with an image of the web page.

Also, in some embodiments, the tracker 1300 is configured to track a movement of a cursor operated by the first product tester 14. For example, the first product tester 14 may be using his / her device (e.g., laptop, desktop, handheld device, such as a cell phone, etc.) to perform the product testing. In such cases, the tracker 1300 is configured to track a position of the cursor in the product tester's device as operated by the first product tester 14. In some cases, if the product tester 14 is using a cell phone with a touchscreen to perform the product testing, the tracker 1300 may be configured to track a position of the finger position as applied on the touchscreen. Thus, as used in this specification, the term "cursor" is not limited to a displayed item operated using a touchpad, a mouse, or a knob, and the term "cursor" may also include non-displayed item that is associated with a movement of a finger as applied on a touchscreen.

Also, in some embodiments, the tracker 1300 is configured to track a selection of a tab, recording a selection of a button, recording a selection of an icon, recording a typed text, or any combination of the foregoing, performed by the first product tester 14.

The system 10 further includes a graphic generator 1302 configured to generate a graphic representing the tracked movement by the tracker 1300. In some embodiments, the graphic comprises a line traversing a plurality of cursor positions. In some embodiments, the graphic may also comprises a selection identifier identifying a position in the image of the web page at which the first product tester 14 performed a selection.

The system 10 may also include an image database 1304 configured to store an electronic image in a non-transitory medium, the electronic image comprising the image of the web page and the graphic superimposed with the image of the web page. In some embodiments, the image database 1304 is configured to store the electronic image in association with an identity of the first product tester 14 and in association with the product being tested. The image database 1304 may be one or more non-transitory medium located at a same facility or at different facilities.

Alternatively or additionally, the system 10 may further include a video generator 1310 configured to generate a video of the tracked interaction. In some embodiments, the video may show a movement of a cursor as operated by the product tester 14 while testing a web page. The video may also show a selection of an object in the web page by the product tester 14. In one implementation, the video may be a recording of screenshots over time to show an interaction of the product tester 14 with the web page being tested. In other embodiments, the video may contain images of a processor-generated graphic (tracking an interaction of the product tester 14) superimposed with image(s) of the web page being tested. For example, the graphic may be a "growing" line that follows a position of a cursor, thereby representing cursor positions over time. In some embodiments, the video may also show a selection identifier identifying a position in the image of the web page at which the first product tester 14 performed a selection (e.g., a clicking operation). For example, the graphic may include an identifier (e.g., a circle) placed on the "growing line" wherever the product tester 14 performs a clicking operation.

In some embodiments, the system 10 may also include a video database 1314 configured to store the video in a non-transitory medium. In some embodiments, the video database 1314 is configured to store the video in association with an identity of the first product tester 14 and in association with the product being tested. The image database 1314 may be one or more non-transitory medium located at a same facility or at different facilities.

As shown in **FIG. 1B****,** the system 10 also includes a testing monitoring module 1400 configured to monitor a progress of the product testing. By means of non-limiting examples, the testing monitoring module 1400 is configured to determine a percentage of the product testing completed, a duration spent by the first product tester, a number of steps taken by the first product tester, time wasted by the first product tester, time lapsed before a first link is clicked by the first product tester, etc.

The system 10 further includes a test result retrieval module 1500 configured to obtain a first testing result achieved by the first product tester 14 completing the product testing. The test result retrieval module 1500 is also configured to obtain additional testing result(s) from one or more additional product tester(s) 14. For example, the test result retrieval module 1500 may be configured to also obtain a second testing result achieved by the second product tester 14 completing the product testing. The system 10 further includes an analyzer 1502 configured to analyze the first testing result and the second testing result to determine whether the first testing result, the second testing result, or both of the first testing result and the second testing result, are reliable or not.

In some embodiments, the analyzer 1502 may also be configured to use other information obtained by the testing monitoring module 1400, to determine whether one or more of the product testing results are reliable or not.

The test result retrieval module 1500 may be configured to generate one or more product testing reports, such as those shown in **FIGS. 8A-8C** and **FIGS. 10A-10E****.** The product testing reports may be provided to one or more users through one or more user interface(s) provided by the user interface generator 1350. For example, one or more reports may be provided to a user associated with the first party 12 providing the product being tested. As another example, one or more reports may be provided to an administrator or another user associated with the second party 16.

Although the system 10 has been described with reference to connecting a product tester 14 with a certain product testing project to test a certain product created by a party 12, in other embodiments, the system 10 may connect multiple product testers 14 to a certain product testing project. In one implementation, the testing interface module is configured to provide multiple instances of the testing interface to multiple product testers 14. For example, the testing interface (e.g., an instance of it) may provide the features of the product and the product testing instruction for allowing a second product tester 14 to perform the product testing on the product based on the product testing instruction. Also, in some embodiments, the system 10 may be configured to provide multiple instances of virtual testing environment for multiple product testers 14 to perform product testing.

In addition, in other embodiments, the system 10 may connect multiple product testers 14 to multiple product testing projects to test different products created by different parties 12.

It should be noted that the system 10 may be implemented using a single device, or using a plurality of devices. For example, the entire system 10 may be implemented on a server in some embodiments. In other embodiments, different components of the system 10 may be implemented on different machines, or on different sets of machines. For example, in some embodiments, the input(s) 1002, the notification generator 1004, the communication interface 1008, the reply counter 1040, the comparator 1042, and the filter 1050 may be implemented using a first set of one or more devices, the testing interface generator 1100 may be implemented using a second set of one or more devices, the tracker 1300, the graphic generator 1302, and the video generator 1310 may be implemented using a third set of one or more devices, the testing monitoring module 1400 may be implemented using a fourth set of one or more devices, and the test result retrieval module 1500 and the analyzer 1502 may be implemented using a fifth set of one or more devices. A device may be a processor, a computer, a server, a database, etc.

Although the above embodiments have been described with reference to testing a product that is a web page or a web site, in other embodiments, the system and method described herein may be applied to test other products. By means of non-limiting examples, the product may be any software, any hardware, any physical device, or any computer modeling.

Also, in some embodiments, a component in the system 10 may be partially or completely implemented at a product tester's 14 device or at a device used by the first party 12 (e.g., a computer at the provider of the product being tested). For example, in some embodiments, all or a part of the testing interface generator 1100 may be implemented at a product tester's 14 device. In one implementation, a product tester may install an application provided by the second party 16 onto a device (e.g., a laptop, a desktop computer, a handheld device, etc.) of the product tester 14, which allows the device to display a testing interface in response to the product tester 14 accepting a product testing project. The same application may also be installed by multiple product testers 14.

Similarly, all or a part of the tracker 1300, all or a part of the graphic generator 1302, and/or all or a part of the video generator 1310 may be implemented at a product tester's 14 device. In one implementation, a product tester may install an application provided by the second party 16 onto a device (e.g., a laptop, a desktop computer, a handheld device, etc.) of the product tester 14, which allows the device to track an action of the product tester 14 as the product tester 14 is using the device to perform the product testing, and to generate images and/or videos capturing the action of the product tester 14. The same application may also be installed by multiple product testers 14.

As another example, all or a part of the user interface generator 1350 may be implemented at a product provider's (first party's 12) device. In one implementation, a product provider may install an application provided by the second party 16 onto a device (e.g., a laptop, a desktop computer, a handheld device, etc.) of the product provider, which allows the product provider to use its device to create product testing instruction, select product testing parameters, and provide information regarding the product that is desired to be tested. The application also allows the device at the product provider to view product testing results transmitted by the system 10. The same application may also be installed by multiple product providers 12.

Accordingly, the system 10 described herein is not limited to one or more devices associated with the second party 16, and may include one or more devices being used by the product testers 14, and/or one or more devices being used by users at the product provider (the first party 12).

Furthermore, in some embodiments, any of the components of the system 10 may be implemented using hardware, software, or a combination of hardware and software. For example, each of the items below may be implemented using a hardware, software, or a combination of both: the one or more input(s) 1002, the notification generator 1004, the communication interface 1008, the reply counter 1040, the comparator 1042, the filter 1050, the product tester management module 1080, the testing interface generator 1100, the timer 1200, the time-comparator 1202, the tracker 1300, the graphic generator 1302, the video generator 1310, the user interface generator 1350, the testing monitoring module 1400, the test result retrieval module 1500, the analyzer 1502.

Also, in some embodiments, a processor-readable medium including a set of instructions for providing one or more features described herein is provided. The instructions in the processor-readable medium, when executed by a processing unit, will cause a method for providing a product testing to be performed. The instructions may include: instruction for providing a notification to inform a plurality of product testers that a product is available for product testing, wherein the product is associated with a first party and the notification generator is associated with a second party that is not the same as the first party; instruction for receiving an electronic reply from a device being used by a first product tester of the plurality of product testers through a network, the reply indicating that the first product tester will perform the product testing; instruction for updating a reply count in response to the received electronic reply; and instruction for, in response to the electronic reply, providing a testing environment that comprises a testing interface for the first product tester, the testing interface presenting features of the product and the product testing instruction for allowing the first product tester to perform the product testing on the product based on the product testing instruction, the product testing instruction providing a plurality of tasks for testing the product.

As illustrated in the above embodiments and examples, the system 10 and the method 200 described herein are advantageous because they allow a product to be tested efficiently under multiple different testing parameters. For example, a software application may be tested under 10 different platforms by multiple product testers 14. Because the product testing may be performed by multiple product testers 14 in parallel, the user at the product provider can obtain product testing results very quickly. Also, because multiple product testers 14 can be assigned to perform each product testing (e.g., testing an application under a certain platform), the product test result being provided to the product provider can be very accurate and reliable. More importantly, the above benefits are provided for the product provider without the need for the product provider searching for qualified product testers. Accordingly, embodiments and features of the system 10 and the method 200 described herein have practical and real world utility, and they create tangible and concrete results that significantly improve the way product testing is performed.

Machine-based product testing performed by product testing device

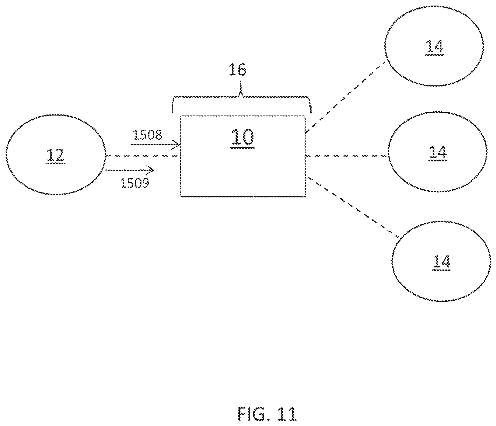

As described in the above embodiments, the system 10 is configured to obtain a product from the party 12, and provide testing interface for allowing one or more tester(s) 14 to perform product testing on the product. In some embodiments, the system 10 may be configured to perform product testing on one or more additional product(s) without requiring any human tester 14. **FIG. 11** illustrates an example of such scenario. As shown in the figure, the party 12 provides a product 1508 for product testing, and the system 10 provides testing interface for allowing one or more product testers 14 to perform product testing on the product 1508. In the illustrated example, the product being tested comprises software. Subsequent to the product testing performed by the tester(s) 14, the party 12 may update the product to create a new version of the product. The party 12 may then send the updated product (e.g., new product) 1509 to the system 10 for product testing. In some embodiments, in response to receiving a request for product testing from the party 12 to perform testing on the updated product 1509, the system may create notification 1005 to initiate another round of product testing by one or more tester(s) 14, as similarly discussed. Alternatively, in other embodiments, instead of having one or more human tester(s) 14 performing product testing on the updated product 1509, the system 10 itself may perform product testing on behalf of a human tester 14.

In one implementation, the system 10 utilizes the tracked information obtained by the tracker 1300 to perform testing of the new product 1509. The system 10 may re-execute the tracked actions of previous human tester 14 to test the new product 1509. Accordingly, while the earlier product 1508 may be tested by human tester(s) 14, a later product 1509 may be tested by the system 10. In other words, an earlier product testing (e.g., first product testing) may be human-based, and a later product testing (e.g., a second product testing) may be machine-based.

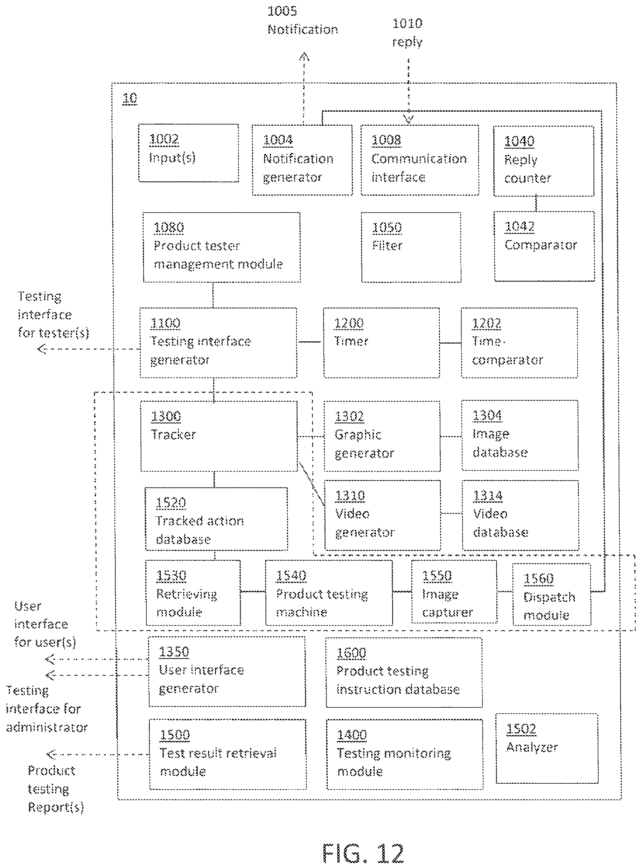

**FIG. 12** illustrates a system 10 for providing product testing, wherein the system 10 includes additional features for allowing machine-testing of products. The system 10 is the same as the system 10 of **FIG. 1B****,** except that the system 10 also includes a non-transitory medium 1520 (e.g., a tracked action database) for storing data based on a testing of a first product, a retrieving module 130, and a product testing machine 1540. The data stored in the non-transitory medium 1520 may be data regarding one or more tracked actions of tester(s) 14 performed while testing the first product 1508. The retrieving module 1530 is configured to access an electronic file containing the data (generated based on the testing of the first product 1508) from the non-transitory medium 1520. The product testing machine 1540 is configured to perform machine-testing for the second product 1509 based on the data in the electronic file. The second product 1509 includes one or more features that are different from the first product 1508.

As shown in the figure, the non-transitory medium 1520 is coupled to the tracker 1300. As similarly discussed, the tracker 1300 is configured to track an interaction of a tester with a testing interface (e.g., testing interface 402) that presents features of a product being tested. The tracker 1300 is configured to provide data (representing tracked actions of testers 14) for storage in the non-transitory medium 1520 in a form of an electronic file, wherein the data is based on the tracked interaction of the testers 14. The tracker 1300 may configured to track a movement of a cursor operated by the tester 14. Additionally, or alternatively, the tracker 1300 may be configured to track a selection of a tab, a selection of a button, a selection of an icon, a selection of a text, or any combination of the foregoing. The tracker 1300 may also track a movement of a finger swipe, or a simulated finger swipe.

The non-transitory medium 1520 is configured to store the electronic file in association with an identity of the first product 1508. For example, the electronic file may include information regarding tracked action(s) of a tester 14 that was performed to test a feature of the first product 1508, and such electronic file is stored in the non-transitory medium 1520 in association with the identity of the first product 1508. The non-transitory medium may also store one or more additional electronic files that are associated with the identity of the first product 1508. For example, the additional electronic file may include information regarding tracked action(s) of another tester 14 that was performed to test the same feature of the same first product 1508.

In some cases, if there are multiple electronic files in the non-transitory medium 1520 that are associated with the same tested product, the retrieving module 1530 may then be configured to select one of the electronic file for use by the product testing machine 1540. For example, there may be a first electronic file having data regarding tracked actions of a first tester 14 who performed product testing on a product, and a second electronic file having data regarding tracked actions of a second tester 14 who performed product testing on the same product. In such cases, the retrieving module 1530 may be configured to select one of the electronic files in the non-transitory medium 1520 having a latest time stamp for use by the product testing machine 1540.

In some embodiments, the data in the electronic file may include information regarding tracked actions of a tester 14, and respective time stamps of the tracked actions. The product testing machine 1540 is configured to re-execute the tracked actions for performing the testing of the second product based on the information in the electronic file regarding the tracked actions of the tester 14. The time stamps allow the product testing machine 1540 to know the order of the actions to re-execute. In some embodiments, the product testing machine 1540 may be configured to re-execute the tracked actions according to the same timing of the time stamps. In other embodiments, the product testing machine 1540 may re-execute one or more of the tracked actions at timing that is different from those represented by the time stamps.

In some embodiments, the data in the electronic file are based on tracked action(s) performed using a cursor and/or a keyboard. For example, the data in the electronic file may comprise: cursor positions; a text typed by a tester; a location of the text typed by the tester, a location of an object selection; or any combination of the foregoing. The data in the electronic file may also be based on action(s) performed using a touchpad or touch screen. The tracked action(s) in the electronic file may be actions performed by a tester 14 while performing a prescribed task to test a feature of the first product 1508. If the product testing of the first product 1508 involves multiple tasks, the electronic file may include multiple sets of tracked actions for the respective tasks. Alternatively, the non-transitory medium 1520 may store multiple electronic files for respective tasks to test the first product 1508. For example, a first electronic file may contain data regarding tracked action(s) of a tester who tested a first feature of the product, and a second electronic file may contain data regarding tracked action(s) of the tester who tested a second feature of the product. In such cases, the first electronic file may be considered a first sub-file, and the second electronic file may be considered a second sub-file, wherein the first sub-file and the second sub-file are parts of a super-file that is associated with the testing of the product. Thus, as used in this specification, the term "file" may be a single file, a sub-file that is a part of a super-file, multiple sub-files, multiple files that are associated with each other, or a folder that contains multiple files or sub-files.

In some cases, the data in an electronic file stored in the non-transitory medium 1520 may have the following data structure, or may be based on data having the following data structure: (Action type; details of tracked action). The following are some examples of action type and details of tracked action:

| Action type | Details of tracked action |
|---|---|
| Cursor movement | (X1, Y1), (X2, Y2) |
| Object selection | (X1, Y1) |
| Text / key typing | (X1, Y1), Text / Key |
| Finger / simulated swipe | Swipe trajectory |

In the above examples, if a tracked action concerns cursor movement, then the associated detail of the tracked action may be a beginning position (X1, Y1) of the cursor, and an ending position (X2, Y2) of the cursor. If the tracked action concerns object selection, then the associated detail of the tracked action may be a location (X1, Y1) of the object that was selected. If the tracked action concerns text / key typing, then the associated detail of the tracked action may be a location (X1, Y1) of the text / key being typed, and the text / key being typed. If the tracked action concerns a finger / simulated swiping, then the associated detail of the tracked action may be a trajectory of the swiping. By means of non-limiting examples, the trajectory of the swiping may be a horizontal swipe, a vertical swipe, a diagonal swipe, a circular swipe, or any of other user-created swiping patterns.

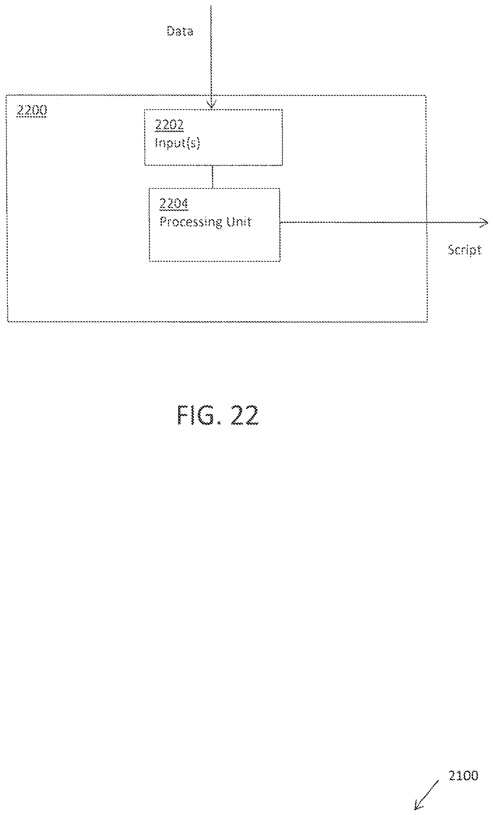

In some embodiments, the electronic file retrieved by the retrieving module 1530 may comprise a script. The script may be generated by a script generator using data regarding tracked action(s) of a tester 14. For example, if the data regarding tracked action is "Text / key typing, (225, 850), Blue", the script generated based on such data may be a command or instruction prescribing that the text "Blue" be typed at the coordinate (225, 850) at a testing interface (e.g., testing interface 402) that is configured to test the product. The product testing machine 1540 is configured to run the script (which includes data based on tracked action(s) of a tester 14 while testing the first product 1508) for testing the second product 1509. The script generator may be a part of the system 10. In some cases, the script generator may be a part of the product testing machine 1540. In such cases, the product testing machine 1540 is configured to access an electronic file in the non-transitory medium 1520 that contains data representing tracked actions of a tester 14. The script generator in the product testing machine 1540 then generates a script based on the data representing the tracked actions, and the product testing machine 1540 then runs the script to perform machine-testing of the second product 1509. In other embodiments, the script generator may be implemented in the retrieving module 1530 and/or in the tracker 1300. The script generator will be described in further detail below with reference to **FIG. 22****,** which illustrates an apparatus 2200 that may be used to implement the script generator.

In some embodiments, the script generator may be configured to consider the testing performed by multiple testers 14 (as opposed to just selecting data based on one tester 14). In particular, the script generator may be configured to examine the tracked actions from multiple testers 14, which were performed to test the same feature of the same product, and extract the commonalities to create the script. For example, when interacting with a product to test a feature of the product, a first tester 14 may perform action A, and then may wait 30 seconds before performing action B. On the other hand, a second tester 14 may perform action A, and may then 5 seconds before performing action B to accomplish the same task to test the same feature of the product. In such case, the script generator may combine or merge these two sets of data to create a script, which prescribes that action A be performed, and then action B be performed 5 seconds after action A. In this example, the script generator performs a "MIN" function to select the smallest time gap between two actions A, B. In other embodiments, the script generator may determine that the time gap between actions A, B does not affect a result of the testing. In such cases, the script generator may create a script that prescribes action A be performed, and then action B be performed immediately or 1 second after action A. In such cases, the script generator incorporate a time gap between actions A, B that is different from both the ones tracked in the first and second testers 14.

The script generator is advantageous because it converts the data representing previously tracked actions of a tester 14 into command(s) or instruction(s) executable by the product testing machine 1540 to perform machine-based product testing. In other embodiments, the system 10 may not include the script generator. Instead, the product testing machine 1540 is configured to receive data representing previously tracked actions of a tester 14, and use the data directly as input to perform a product testing on the product. In such cases, the product testing machine 1540 itself is configured to understand the data representing the tracked actions of the tester 14, and apply such data in a product testing algorithm to cause a product testing to be performed based on the data. In one implementation, the data is received by the product testing machine 1540 as input, and the product testing machine 1540 then runs an algorithm using the data to perform product testing on the second product 1509. Thus, the script generator may not be needed in some embodiments.

Returning to **FIG. 12****,** in some embodiments, the product testing machine 1540 is configured to simulate actions of a tester 14 based on the data in the electronic file. For example, the product testing machine 1540 may be configured to virtually move a cursor with respect to a testing interface (e.g., the testing interface 402) without input from a cursor control. As another example, the product testing machine 1540 may be configured to virtually make a selection in a testing interface without input from a user control. As a further example, the product testing machine 1540 may be configured to virtually type a text in a field of a testing interface without input from a keyboard. As another example, the product testing machine 1540 may be configured to virtually create a finger / simulated swipe in a testing interface without input from a user control (e.g., touchpad, touch screen, etc.). The product testing machine 1540 may be configured to perform any combination of the foregoing to perform a product testing task.

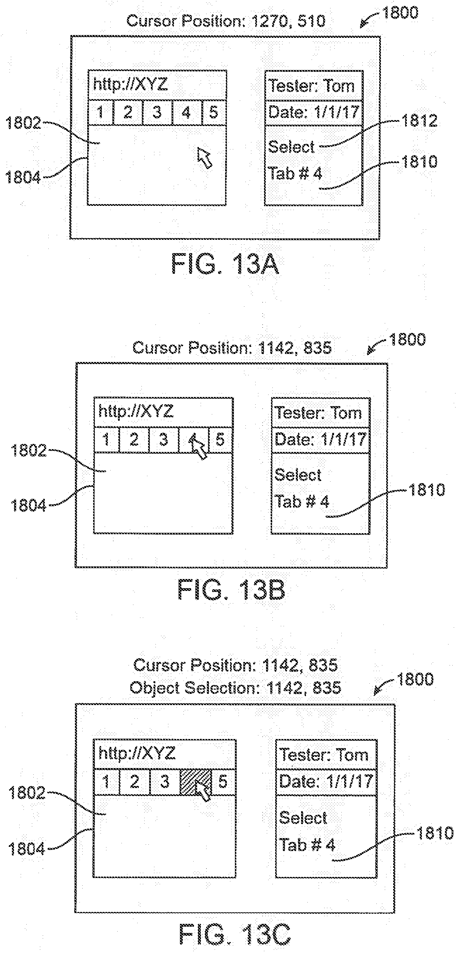

**FIGS. 13A-13F** illustrate an example of the above features regarding tracking actions of a tester 14 during testing of a first product, and using the tracked actions to perform machine-based product testing on a second product. As shown in **FIG. 13A****,** the system 10 presents a testing interface 1800 for allowing a tester 14 to perform testing on a first product 1802. The first product 1802 may be the first product 108 shown in **FIG. 11****.** The testing interface 1800 is similar to the testing interface 402 of **FIG. 4****.** The testing interface 1800 includes a window 1804 for presenting features of the first product 1802 being tested. In the illustrated example, the first product 1802 comprises a web page. In other examples, the first product 1802 may be a web site, a computer application (e.g., an enterprise application), a mobile (e.g., handheld) device application, an application for a specialized processor, etc.

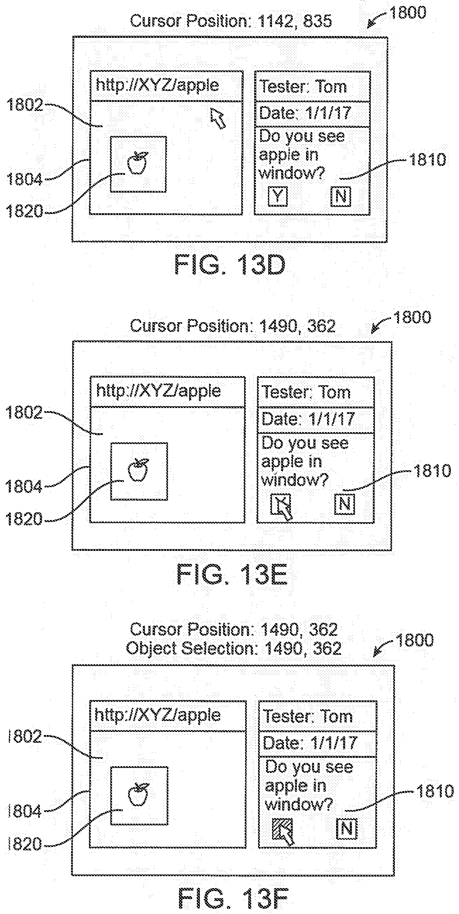

As shown in **FIG. 13A****,** the testing interface 1800 also includes a field 1810 providing one or more tasks 1812 for the product tester 14 to perform on the first product 1802. The field 1810 may also provide a question for the tester 14 to answer in some cases. As shown in **FIG. 13A****,** the first product 1802 being tested by the tester 14 via the testing interface 1800 includes tabs 1-5. The testing interface 1800 is configured to test the feature of tab 4 in the example. Accordingly, the testing interface 1800 provides instruction in the field 1810 to instruct the tester 14 to select tab 4. In response to the testing instruction to perform the tab 4 selection task, the tester 14 moves the cursor from the position shown in **FIG. 13A** to a new position shown in **FIG. 13B****.** While the tester 14 is performing this action, the tracker 1300 of the system 10 tracks the interaction of the tester 14 with respect to the first product 1802 presented in the testing interface 1800. For example, the tracker 1300 may determine that the cursor is at position (X= 1270, Y=510) in **FIG. 13A****,** and is then moved to new position (X=1142, Y=835) in **FIG. 13B****.** When the tester 14 selects tab 4 (shown in **FIG. 13C**), the tracker 1300 also tracks the selection. In the illustrated example, after the tester 14 selects tab 4, the first product 1802 presents an image 1820 of an apple **(****FIG. 13D****),** and the field 1810 of the testing interface 1800 asks the tester 14 to confirm whether he / she sees an apple. The tester 14 then answers the question by moving the cursor from the position (X=1142, Y=835) shown in **FIG. 13D** to a new position (X=1490, Y=362) shown in **FIG. 13E****.** The tester 14 then clicks on the "Y" button at the cursor position (X=1490, Y=362) to confirm that the tester 14 can see the apple. While the tester 14 is performing these actions, the tracker 1300 tracks the interaction of the tester 14 with respect to the testing interface 1800. As a result of testing the feature of tab 4 in the above example, the tracker 1300 may generate the following data representing the tracked actions of the tester 14:

| No. | Action type | Details of tracked action |
|---|---|---|
| 1 | Cursor movement | (1270, 510), (1142, 835) |
| 2 | Object selection | (1142, 835) |
| 3 | Cursor movement | (1142, 835), (1490, 362) |
| 4 | Object selection | (1490, 362) |

The above data may be stored in the non-transitory medium (e.g., tracked action database) 1520 of the system 10 for later use. The data may be stored in association with the first product 1802 tested by the tester 14. The data may also be stored in association with an identity of the tester 14. Also, in some embodiments, the data may be stored in association with metadata indicating the nature of the tester interaction. For example, the above first two tracked actions (actions 1, 2) may be stored with metadata "product feature selection" indicating that the actions were performed to select a feature in the product being tested. Similarly, the last two tracked actions (actions 3, 4) in the above example may be stored with metadata "confirm feature = Y" indicating that the actions were performed to confirm a presence of a feature in the product being tested, and that the testing of the tab 4 is successful because the tester 14 confirmed the presence of the feature. Furthermore, the non-transitory medium 1520 may store the image of **FIG. 13F** in association with the data representing the tracked actions. This image is useful because it includes a content (e.g., image of an apple in the example) indicating a successful result of the task for testing the tab 4 feature of the first product 1802.

In other embodiments, instead of tracking cursor operations anywhere in the testing interface 1800, the tracker 1300 may be configured to track cursor operation with respect to the product itself (i.e., features in the window 1804). In such cases, the tracker 1300 does not track cursor operations in the field 1810 of the testing interfaced 1800. However, the tracker 1300 may still track other forms of tester interaction with the testing interface 1800. For example, instead of asking the tester 14 to use the cursor to select "Y" or "N" to confirm whether he / she sees an apple, the testing interface 1800 may ask the tester 14 to press key "Y" or "N" in the keyboard, or may ask the tester 14 to say "Yes" or "No". Accordingly, the tracker 1300 may be configured to track key stroke, voice input, etc. Data representing such tracked actions will then be stored in the non-transitory medium 1520.

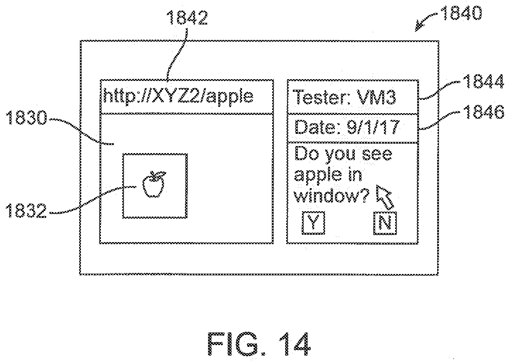

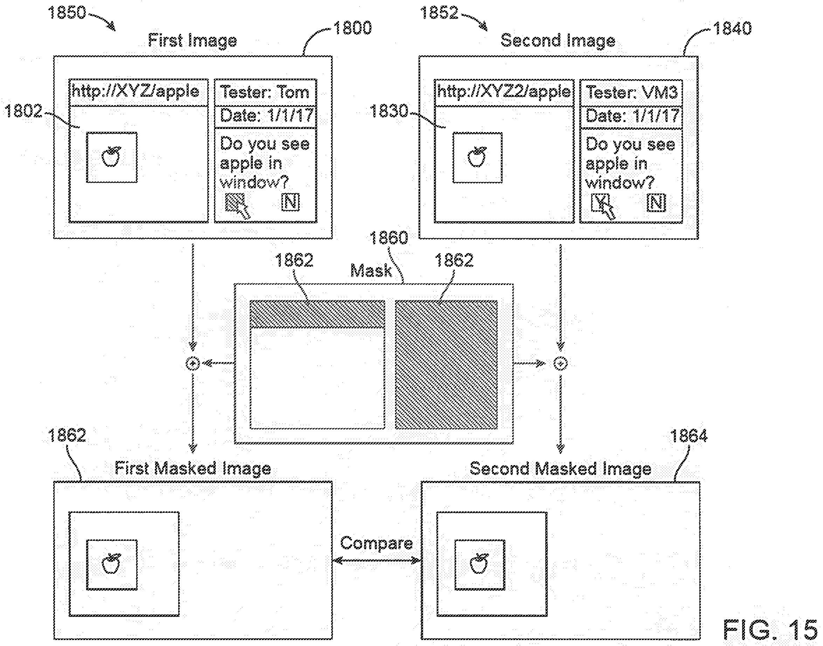

After the first product 1802 has been tested, the system 10 may later receive another request to test a new product (a second product) that is an updated version of the first product 1802. When this happens, instead of having a tester 14 performing testing on the second product, the system 10 itself performs testing of the new product based on the data stored in the non-transitory medium 1520. Following the above example, the retrieving module 1530 of the system 10 access the non-transitory medium 1520 to obtain the data representing the previously tracked actions of the tester 14 performed while testing the first product 1802. The product testing machine 1540 then performs testing of the second product based on the data. In some embodiments, the data may be used to create a script that prescribes actions to be performed by the product testing machine 1540. Accordingly, the product testing machine 1540 executes the script, which causes the product testing machine 1540 to electronically operate a testing interface to test feature(s) of the second product. In particular, when testing the tab 4 feature of the second product based on the previously tracked actions (actions 1, 2 in the example), the product testing machine 1540 moves the cursor to position (1142, 835), and selects the tab 4 at the position (1142, 835). As a result of these operations by the product testing machine 1540, the second product 1830 (which may be the second product 1509 of **FIG. 11**) in the testing interface 1840 displays an apple in a window 1832 (**FIG. 14**). Because the next two tracked actions (actions 3, 4 in the example) are for confirming a presence of an object in the product to determine if the testing of the feature in the product is successful or not, the product testing machine 1540 does not repeat the tracked actions 3, 4. Instead, the product testing machine 1540 may compare the image from the testing interface 1840 obtained while the product testing machine 1540 is testing the new product 1830, with the previously saved image (i.e., the image of **FIG. 13F** in the example) from the testing interface obtained while the tester 14 was testing the first product 1802. **FIG. 15** illustrates this concept.

As shown in **FIG. 15****,** the product testing machine 1540 may obtain a first image 1850 that is associated with the testing of the first product 1802, and obtain a second image 1852 that is associated with the testing of the second product 1830. The first image 1850 is based on a completion of a first task (the task to test the tab 4 feature of the first product 1802 in the example) performed during the testing of the first product 1802 by the tester 14, and the second image 1852 may be based on a completion of a second task (the task to test the tab 4 feature of the second product 1830 in the example) performed during the testing of the second product 1830 by the product testing machine 1540. In the illustrated example, the first image 1850 is the same as that shown in **FIG. 13F** (which was previously stored after the tester 14 performs the task to test the tab 4 feature in the first product 1802), and the second image 1852 is the same as that shown in **FIG. 14** (which is obtained after the product testing machine 1540 has tested the tab 4 feature in the second product 1830). Accordingly, the first image 1850 comprises a first content (e.g., the image of the apple in the above example) of a first content of the first testing interface 1800 configured for testing the first product 1802, the first content indicating a first result (e.g., a successful result) of a first task for testing the first product 1802. Also, the second image 1852 comprises a second content (e.g., the image of the apple in the above example) of a second content of the second testing interface 1840 configured for testing the second product 1830, the second content indicating a second result of a second task for testing the second product 1830.

In other embodiments, the first image 1850 may be an image of the first product 1802 without the first testing interface 1800, and the second image 1852 may be an image of the second product 1830 without the second testing interface 1840. Accordingly, the first image 1850 comprises a first content (e.g., the image of the apple in the above example) of the first product 1802, the first content indicating a first result (e.g., a successful result) of a first task for testing the first product 1802. Also, the second image 1852 comprises a second content (e.g., the image of the apple in the above example) of the second product 1830, the second content indicating a second result of a second task for testing the second product 1830.

As shown in **FIG. 15****,** the product testing machine 1540 is also configured to apply a mask 1860 to the first image 1850 to create a first masked image 1862, apply the mask 1860 to the second image 1852 to create a second masked image 1864, and compare the first masked image 1862 with the second masked image 1864. The mask 1860 is configured to block out one or more portions of the first image 1850 and the second image 1852. The mask 1860 is advantageous because it blocks out information in the captured images 1850, 1852 that are different from each other, but are not relevant in deciding whether the testing of the product feature fails or not. For example, as shown in the testing interface 1840 of **FIG. 14****,** the identity 1842 of the product being tested is different from that shown in **FIG. 13F****.** Also, the tester identity 1844 in the testing interface 1840 of **FIG. 14** is "VM3", indicating that the testing is being performed by virtual machine No. 3, which is also different from that shown in **FIG. 13F** (showing the tester being "Tom"). In other cases, the tester identity 1844 may be shown in the product itself, as opposed to being displayed in a field of the testing interface. The testing date 1846 in the testing interface 1840 of **FIG. 14** is also different from that shown in **FIG. 13F****.** The product identity 1842, the tester identity 1844, and testing date 1846 are different between the first image 1850 and the second image 1852. However, they are not relevant in deciding whether the testing of the product feature fails or not. Accordingly, the mask 1860 contains one or more regions 1862 configured to block out these items in the first image 1850 and the second image 1852. In some embodiments, if the first image 1850 includes an image of the first product 1802 (without the first testing interface 1800), and if the second image 1852 includes an image of the second product 1830 (without the second testing interface 1840), then the mask 1860 may have one or more regions 1862 configured to block out items in the image of the first product 1802, and corresponding items in the image of the second product 1830.

After the first masked image 1862 and the second masked image 1864 are obtained, the product testing machine 1540 then compares them to see if they are the same or sufficiently similar. If so, the product testing machine 1540 may then determine that the testing of the feature (e.g., the tab 4 feature in the above example) in the new product 1830 passes. On the other hand, if the comparison result indicates that the first masked image 1862 and the second masked image 1864 are not the same or not sufficiently similar, the product testing machine 1540 may then determine that the testing of the feature in the new product 1830 fails. Accordingly, the product testing machine 1540 is configured to determine whether the testing of a feature of a product fails or not based on the comparison of the first masked image 1862 and the second masked image 1864.

Various techniques may be employed in different embodiments to compare the first masked image 1862 and the second masked image 1864 with each other. In some embodiments, the product testing machine 1540 may be configured to perform cross correlation to determine a level of similarity between the first and second masked images 1862, 1864. If the level of similarity is above a certain prescribed threshold, then the product testing machine 1540 may consider the first and second masked images 1862, 1864 as being the same or sufficiently similar. The prescribed threshold may be 0.8, 0.9, 0.95, etc, or any of other user-defined number (with 1.0 representing the situation in which the masked images 1862, 1864 are identical).

In other embodiments, the product testing machine 1540 may be configured to perform an image subtraction between the first and second masked images 1862, 1864 to obtain a subtracted image. If the first and second masked images 1862, 1864 are identical, the subtracted image will have zero pixel values throughout. On the other hand, if the first and second masked images 1862, 1864 are substantially similar, the subtracted image will have some non-zero pixel values, but not a lot. In one implementation, the product testing machine 1540 may be configured to count the number of non-zero pixel values in the subtracted image. If the number is below a certain prescribed threshold, the product testing machine 1540 may consider the first and second masked images 1862, 1864 as being the same or sufficiently similar. The prescribed threshold may be 100 pixels, 80 pixels, 50 pixels, 10 pixels, etc, or any of other user-defined number. Alternatively, the prescribed threshold may be expressed as a percentage of the total number of pixels in the image. For example, the prescribed threshold may be 5% of the total pixel numbers, 3% of the total pixel numbers, 1% of the total pixel numbers, etc, or any of other user-defined percentage.

In some embodiments, in addition to, or in the alternative of, considering the number of non-zero pixel values in the subtracted image, the product testing machine 1540 may also analyze the distribution of the non-zero pixel values in the subtracted image to determine whether the first and second masked images 1862, 1864 are the same or substantially similar. If the non-zero pixel values in the subtracted image are spread out, then the product testing machine 1540 may determine that the non-zero pixel values are due to noise or due to inaccuracy in the alignment of the features in the two masked images 1862, 1864. In such cases, the two masked images 1862, 1864 may be considered as being sufficiently similar. On the other hand, if the non-zero pixel values in the subtracted image are clustered in group(s), then the product testing machine 1540 may determine that the two masked images 1862, 1864 are different or not substantially similar.

In the above example, the system 10 has been described with reference to testing a feature of the product 1830. In other embodiments, the system 10 may be configured to test multiple features of the product 1830, wherein the multiple features includes at least a first feature and a second feature. In such cases, the product testing machine 1540 may be configured to test the first feature, and the second feature. In one implementation, the product testing machine 1540 may be configured to test the first feature of the product 1830 by running a first script that is based on a first tracked action of a tester 14, and test the second feature of the product 1830 by running a second script that is based on a second tracked action of the tester 14.

Also, the above example is described with reference to testing a tab feature of a webpage. In other embodiments, the system 10 may be configured to test other features of other types of products. For example, the system 10 may test a selection of a link, a selection of a button, an input of a command, etc.

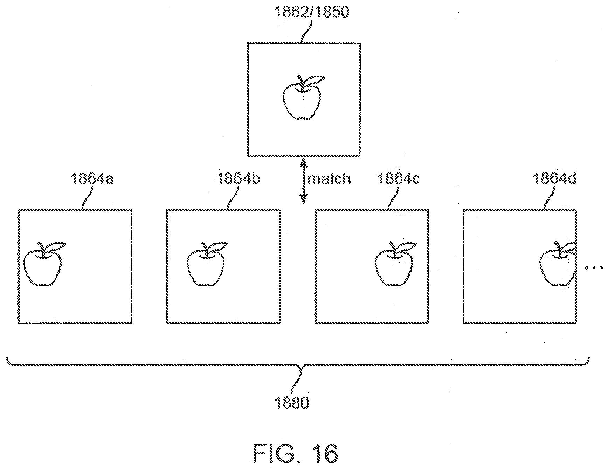

In some cases, the first image 1850 of the testing interface 1800 (that was captured during a previous testing of an earlier product 1802) may include a feature with varying configuration over time (e.g., a video, an animation, a moving object, etc.). In such cases, when the product testing machine 1540 performs machine-testing of the later product 1830, the testing interface 1840 may also include the same feature with the varying configuration - i.e., when the same stage of the testing is reached. For example, instead of being a still image, the image of the apple in the first image 1850 in the above example may be one of a plurality of image frames in a video of the first product 1802 that was captured during a testing session. In this example, the video shows a moving apple. Following this example, in order to determine whether the machine-based product testing being performed on the second product 1830 fails or not, the system 10 is configured to find an image (from a sequence of image frames in the video of the moving apple in the second product 1830) that matches the image of the apple in the first image 8150 (or in the first masked image 1862). **FIG. 16** illustrates the above concept. As shown in the figure, the first image 1850 / the first masked image 1862 includes the image of the apple, which is one of the image frames in the video of the moving apple. When the machine-based testing performed by the product testing machine 1540 reaches the same stage (e.g., at the page of the second product 1830 showing a video of a moving apple), the system 10 then compares the image frames in the video with the image of the apple from the first image 1850 or from the first masked image 1862. In the illustrated example, there are four image frames 1864a-1864d in the video of the moving apple in the second product 1830. Accordingly, the system 10 performs the image comparison to compare each of these four image frames 1864a-1864d with the image of the apple from the first image 1850 or first masked image 1862. As shown in the figure, image frame 1864b matches with the image of the apple associated with the first product 1802. Accordingly, the system 10 can determine that the testing of the tab 4 feature of the second product 1830 passes. In one implementation, the image capturing feature described above may be performed by an image capturer 1550 (shown in **FIG. 12**). The image capturer 1550 is configured to determine a second image (which may be the second image 1852 or the second masked image 1864) by comparing a sequence of image frames 1864 with the first image (which may be the first image 1850 or the first masked image 1862), and selecting one of the image frames 1864 that matches the first image as the second image. In some embodiments, the image capturer 1550 is configured to compare a region-of-interest in the first image with corresponding region-of-interest in the sequence of image frames. The image capturer 1550 is advantageous because it addresses the situation in which the stored first image 1802 (representing a success testing of a feature of the first product 1508/1802) is a part of a video or moving feature in the first product 1508/1802. As shown in the above example, the machine-based testing by the product testing machine 1540 is based on a comparison of captured images (one from human-based testing, and another one from machine-based testing). If the first captured image is from a video or a moving feature of the first product 1508/1802, then the product testing machine 1540 will need to search through image frames from the same corresponding video or moving feature in the second product 1509/1830 in order to verify whether there is an image that matches with the first image (e.g., the first image 1850 / first masked image 1862).

Returning to **FIG. 12****,** in some embodiments, the system 10 may comprise a dispatch module 1560 configured to automatically send out a request to test the second product 1830 if the testing of the feature of the second product 1830 based on the comparison of the first and second masked images 1862, 1864 fails. In some cases, the testing of the new product by the product testing machine 1540 based on previously tracked actions of a tester 14 may result in a failed testing. This is a possible scenario because an updated product may have a feature that renders a previously tracked product testing action inapplicable for testing the updated product. If the machine-based product testing fails, the dispatch module 1560 then generates a signal to cause the notification generator 1004 to send out one or more requests for product testing by one or more testers 14. The technique and features associated with product testing by testers 14 were previously described, and will not be repeated here. If the product testing by one or more testers 14 fails, the system 10 may then determine that the second product 1830 (e.g., the updated product) fails product testing (because it fails both the machine-based testing, and the human-based testing). On the other hand, if the product testing on the new product 1830 by one or more testers 14 passes, the system 10 may then determine that the new product 1830 passes product testing. In such cases, the system 10 then saves the tracked actions (the ones that results in the passing of the product testing on the new product 1830) of the tester 14 in the non-transitory medium 1520 for later use. For example, if another new product later (e.g., another updated product) is received by the system 10 for product testing, the system 10 may then retrieve the electronic file with the latest tracked tester's actions for use by the product testing machine 1540 to perform machine-based product testing on the newest product.

In the above example, the product testing machine 1540 is described as repeating a selection of an object in the second product 1830 at a location in the second product 1830 that is the same as the location in the first product 1802 (as tracked by the tracker 1300). This is because the selection of the object in the first product 1802 by the tester 14 is tracked by the tracker 1300, and it is assumed that the same object will appear in the second product 1830 when tested by the product testing machine 1540. However, in some embodiments, the object selected in the first product 1802 may appear at a different location in the second product 1830. For example, when the party16 updates the first product 1802 to create the second product 1830, the party 16 may move the object (e.g., a tab) in the first product 1802 to another location in the second product 1830. Accordingly, in some embodiments, when the tracker 1300 tracks a selection of an object when the tester 14 tests the product, the tracker 1300 may also capture an image of the object being selected. In the above example, the tracker 1300 may capture an image of tab 4 when the tester 14 selects tab 4. The captured image of the object may then be stored in the non-transitory medium 1520 in association with the data representing the tracked action (e.g., the tracked selection of the tab 4 in the example). In one implementation, the capturing of the image of a selected object may be performed by capturing a screenshot of the product when the tester 14 selects an object, and the coordinate of the object selection, which indicates the object being selected in the screenshot. Later on, when the product testing machine 1540 performs machine-testing of the second product 1830, instead of repeating the selection of the object at the same location as that in the first product 1802, the product testing machine 1540 searches an image of the second product 1830 to look for the same object that was previously selected by the tester 14 in the first product 1802. For example, the product testing machine 1540 may perform an image search to locate the tab 4 in the second product 1830, and if the tab 4 is found, then product testing machine 1540 may then select the tab 4, regardless of whether the tab 4 is at the same position with respect to the second product 1830 as that in the first product 1802. Therefore, in other embodiments, instead of replaying a testing action based on position (e.g., X, Y coordinates) of a previous testing action by a tester 14, the product testing machine 1540 may re-play a previously tracked testing action based on appearance of an object and/or semantics.

It should be noted that the product being tested is not limited to the example and features described herein, and that the product being tested may have other features, and/or may be of different types. By means of non-limiting examples, the product comprises a web page, a web site, a computer application, a mobile device application, or a processor application.

It should be noted that the system 10 is not limited to have the configuration shown in **FIG. 12****,** and that the system 10 is not limited to having the features described herein. In some embodiments, the system 10 may not include one or more of the items described with reference to **FIG. 12****.** Also, one or more of the items described with reference to **FIG. 12** may be combined in some embodiments. For example in some embodiments, the retrieving module 1530 and the product testing machine 1540 may be integrated. In such cases, the retrieving module 1530 may be one or more inputs, or one or more input interfaces, of a processing unit, wherein the processing unit may implement, or may be a part of, the product testing machine 1540. In addition, in some embodiments, the product testing machine 1540 may be a processing unit, or a part of a processing unit. Such processing unit may also be used to implement the tracker 1300, the retrieving module 1530, the image capturer 1550, the dispatch module 1560, or any combination of the foregoing. Alternatively, such processing unit may be communicatively coupled to the tracker 1300, the retrieving module 1530, the image capturer 1550, the dispatch module 1560, or any combination of the foregoing. Furthermore, in some embodiments, the electronic product testing system 10 may include only the product testing machine 1540. In other embodiments, the electronic product testing system 10 may not include the user interface generator 1350, the product testing instruction database 1600, the test result retrieval module 1500, the testing monitoring module 1400, the analyzer 1502, or any combination of the foregoing. Also, in some embodiments, the electronic product testing system 10 may not include one or more items that are outside the dashed-box in **FIG. 12****.** In still further embodiments, the non-transitory medium 1520 may be excluded from the system 10. In such cases, the system 10 is communicatively coupled to the non-transitory medium 1520 (e.g., via the Internet, a cable, or any of other types of network connection). Furthermore, in other embodiments, the product testing machine 1540 may be considered as a testing device. Such testing device may optionally include the image capturer 1550 and/or the dispatch module 1560. Also, such testing device may include a processing unit for providing one or more features described herein.

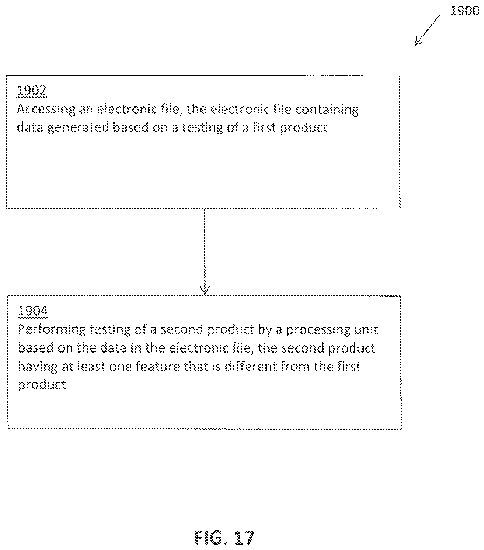

**FIG. 17** illustrates a method 1900 in accordance with some embodiments. The method 1900 is a processor-implemented method for product testing. The method 1900 may be performed by the system 10 of **FIG. 12****.** As shown in the figure, the method 1900 includes accessing an electronic file, the electronic file containing data generated based on a testing of a first product (item 1902); and performing testing of a second product by a processing unit based on the data in the electronic file (item 1904). The second product may have at least one feature that is different from the first product. The first product may be the first product 1802 described in the previous example, and the second product may be the second product 1830 described in the previous example.

In some embodiments, with respect to the method 1900, the data in the electronic file comprises information regarding tracked actions of a tester, and respective time stamps of the tracked actions.

In some embodiments, with respect to the method 1900, the act of performing the testing of the second product comprises re-executing the tracked actions to test the second product based on the information in the electronic file regarding the tracked actions of the tester.

In some embodiments, with respect to the method 1900, the act of performing the testing of the second product comprises simulating actions of a tester.

In some embodiments, with respect to the method 1900, the electronic file comprises a script, and wherein the act of performing the testing of the second product comprises running the script for testing the second product.

In some embodiments, with respect to the method 1900, the data in the electronic file are based on tracked action(s) performed using a cursor and/or a keyboard.

In some embodiments, with respect to the method 1900, the data in the electronic file comprises: cursor positions; a text typed by a tester; a location of the text typed by the tester, a location of an object selection; or any combination of the foregoing.

In some embodiments, with respect to the method 1900, the electronic file is stored in a non-transitory medium in association with an identity of the first product.

In some embodiments, with respect to the method 1900, the non-transitory medium also stores one or more additional electronic files that are associated with the identity of the first product.

In some embodiments, with respect to the method 1900, the act of accessing the electronic file comprises selecting one of the electronic files in the non-transitory medium having a latest time stamp.

In some embodiments, the method 1900 may further include: obtaining a first image that is associated with the testing of the first product, and obtaining a second image that is associated with the testing of the second product.

In some embodiments, with respect to the method 1900, the first image is based on a completion of a first task performed during the testing of the first product, and wherein the second image is based on a completion of a second task performed during the testing of the second product.

In some embodiments, with respect to the method 1900, the first image comprises a first content of a first testing interface configured for testing the first product, the first content indicating a first result of a first task for testing the first product; and wherein the second image comprises a second content of a second testing interface configured for testing the second product, the second content indicating a second result of a second task for testing the second product.

In some embodiments, the method 1900 may further include: applying a mask to the first image to create a first masked image, applying the mask to the second image to create a second masked image, and comparing the first masked image with the second masked image.

In some embodiments, with respect to the method 1900, the mask is configured to block out one or more portions of the first image and the second image.

In some embodiments, with respect to the method 1900, the testing of the second product comprises testing a feature of the second product, and wherein the method further comprising determining whether the testing of the feature of the second product fails or not based on the comparison of the first masked image and the second masked image.

In some embodiments, the method 1900 may further include automatically sending out a request to test the second product if the testing of the feature of the second product based on the comparison of the first and second masked images fails.

In some embodiments, with respect to the method 1900, the processing unit is configured to test multiple features of the second product, the multiple features comprising at least a first feature and a second feature, wherein the act of performing testing of the second product comprises testing the first feature of the second product by running a first script that is based on a first tracked action of a tester, and testing the second feature of the second product by running a second script that is based on a second tracked action of the tester.

In some embodiments, the method 1900 may further include determining the second image by comparing a sequence of image frames with the first image, and selecting one of the image frames that matches the first image as the second image.

In some embodiments, the method 1900 may further include tracking an interaction of a tester with a web page, wherein the data in the electronic file is based on the tracked interaction.

In some embodiments, with respect to the method 1900, the act of tracking comprises tracking a movement of a cursor operated by the tester.

In some embodiments, with respect to the method 1900, the act of tracking comprises tracking a selection of a tab, a selection of a button, a selection of an icon, a selection of a text, or any combination of the foregoing.

In some embodiments, with respect to the method 1900, the first product comprises a web page, a web site, a computer application, a mobile device application, or a processor application.

In some embodiments, with respect to the method 1900, the act of performing the testing of the second product comprises virtually moving a cursor with respect to a testing interface without input from a cursor control.

In some embodiments, with respect to the method 1900, the act of performing the testing of the second product comprises virtually making a cursor selection in a testing interface without input from a cursor control.

In some embodiments, with respect to the method 1900, the act of performing the testing of the second product comprises virtually typing a text in a field of a testing interface without input from a keyboard.

In some embodiments, with respect to the method 1900, the testing of the first product is human-based, and the testing of the second product is machine-based.

In some embodiments, the method 1900 may be performed in response to a processing unit processing a set of instructions stored in a processor-readable medium. In particular, the processor-readable medium includes a set of instructions, wherein an execution of the instructions by a processing unit will cause a method for product testing to be performed, the method comprising: accessing an electronic file, the electronic file containing data generated based on a testing of a first product; and performing testing of a second product based on the data in the electronic file, the second product having at least one feature that is different from the first product.

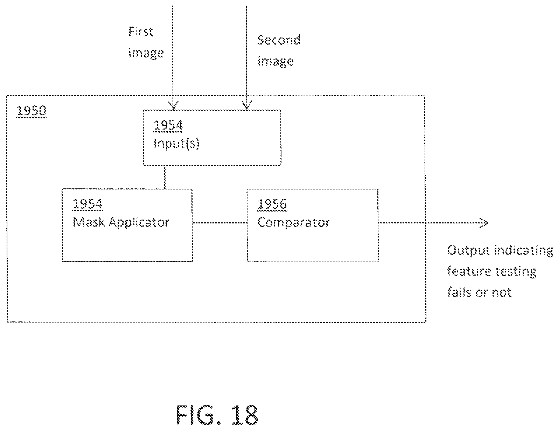

As discussed, the product testing machine 1540 is configured to compare two masked images to determine whether they are the same or substantially similar, and if so, the product testing machine 1540 may then determine that the machine-based testing performed to test the feature of the new product passes. **FIG. 18** illustrates an apparatus1950, which is a component of an electronic product testing system, wherein the component is configured to provide the above features. The component 1950 may be a processing unit. Also, in some embodiments, the apparatus1950 itself may be considered as a product testing device / system, or a component of a product testing device / system. In addition, in some embodiments, the apparatus 1950 may be implemented as a part of the product testing machine 1540, or as a module that is communicatively coupled to the product testing machine 1540. As shown in the figure, the apparatus 1950 includes one or more input(s) 1954 configured to obtain a first image that is associated with a testing of the first product, and to obtain a second image that is associated with a testing of the second product, wherein the testing of the second product comprises a testing of a feature of the second product. The apparatus1950 also includes a mask applicator 1954 configured to apply a mask to the first image to create a first masked image, and to apply the mask to the second image to create a second masked image. The apparatus 1950 also includes a comparator 1956 configured to compare the first masked image with the second masked image to determine whether the testing of the feature of the second product fails or not. In some embodiments, the first image may be the image 1850 of **FIG. 15****,** and the second image may be the image 1852 of **FIG. 15****.** Also, the mask may be the mask 1860 of **FIG. 15****.**

The mask is configured to block out one or more portions of the first image and the second image.

In some embodiments, the first image is based on a completion of a first task performed during the testing of the first product, and wherein the second image is based on a completion of a second task performed during the testing of the second product.

In some embodiments, the first image comprises a first content of a first testing interface configured for testing the first product, the first content indicating a first result of a first task for testing the first product; and wherein the second image comprises a second content of a second testing interface configured for testing the second product, the second content indicating a second result of a second task for testing the second product.

In some embodiments, the apparatus 1950 may further include an image capturer configured to determine the second image by comparing a sequence of image frames with the first image, and selecting one of the image frames that matches the first image as the second image.

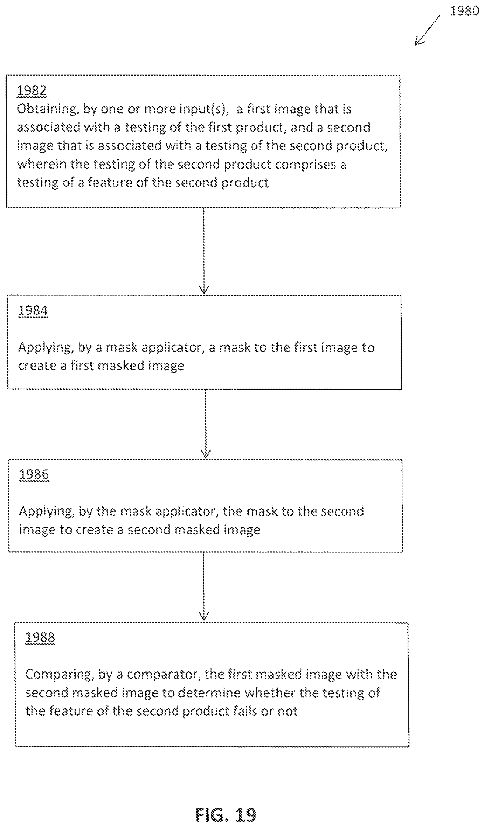

**FIG. 19** illustrates a method 1980 in accordance with some embodiments. The method 1980 is a processor-implemented method for product testing. The method 1980 may be performed by the system 10 of **FIG. 12****.** In one implementation, the method 1980 may be performed by the apparatus 1950 of **FIG. 18****.** As shown in the figure, the method 1980 includes: obtaining, by one or more input(s), a first image that is associated with a testing of the first product, and a second image that is associated with a testing of the second product, wherein the testing of the second product comprises a testing of a feature of the second product (item 1982). The method 1980 also includes: applying, by a mask applicator, a mask to the first image to create a first masked image (item 1984). The method 1980 also includes: applying, by the mask applicator, the mask to the second image to create a second masked image (item 1986). The method 1980 further includes: comparing, by a comparator, the first masked image with the second masked image to determine whether the testing of the feature of the second product fails or not (item 1988). The first product may be the first product 1802 described in the previous example, and the second product may be the second product 1830 described in the previous example.

In some embodiments, with respect to the method 1980, the first image is based on a completion of a first task performed during the testing of the first product, and wherein the second image is based on a completion of a second task performed during the testing of the second product.

In some embodiments, with respect to the method 1980, the first image comprises a first content of the first product, the first content indicating a first result of a first task for testing the first product; and wherein the second image comprises a second content of the second product, the second content indicating a second result of a second task for testing the second product.

In some embodiments, with respect to the method 1980, the mask is configured to block out one or more portions of the first image and the second image.

In some embodiments, the method 1980 further includes determining, by an image capturer, the second image by comparing a sequence of image frames with the first image, and selecting one of the image frames that matches the first image as the second image.

In some embodiments, the method 1980 may be performed in response to a processing unit processing a set of instructions stored in a processor-readable medium. In particular, the processor-readable medium includes a set of instructions, wherein an execution of the instructions by a processing unit will cause a method for product testing to be performed, the method comprising: obtaining, by one or more input(s), a first image that is associated with a testing of the first product, and a second image that is associated with a testing of the second product, wherein the testing of the second product comprises a testing of a feature of the second product; applying, by a mask applicator, a mask to the first image to create a first masked image; applying, by the mask applicator, the mask to the second image to create a second masked image; and comparing, by a comparator, the first masked image with the second masked image to determine whether the testing of the feature of the second product fails or not.

### Mask Generator

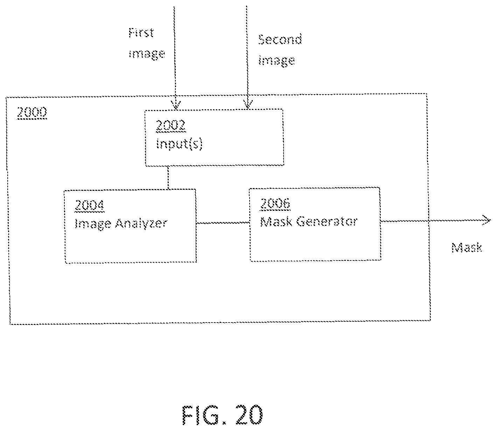

As discussed, the product testing machine 1540 is configured to compare two masked images to determine whether they are the same or substantially similar, and if so, the product testing machine 1540 may then determine that the machine-based testing performed to test the feature of the new product passes. In some embodiments, the system 10 may further include a component configured to generate the mask. **FIG. 20** illustrates an apparatus 2000, which is a component of an electronic product testing system, wherein the component is configured to create a mask for masking one or more images of different products obtained during testing of the products. The component 2000 may be a processing unit. Also, in some embodiments, the apparatus 2000 itself may be considered as a component of a product testing device. In addition, in some embodiments, the apparatus 2000 may be implemented as a part of the product testing machine 1540, or as a module that is communicatively coupled to the product testing machine 1540. As shown in the figure, the apparatus 2000 includes: one or more input(s) 2002 configured to receive a first image of a product captured during a first testing of the product, and a second image of the product captured during a second testing of the product. The apparatus 2000 also includes an image analyzer 2004 configured to determine a first part of the product that is different in the first image and the second image. The apparatus 2000 also includes a mask generator 2006 configured to create a mask for covering an image of the first part of the product.

Optionally, the first testing of the product is associated with a first tester, and the second testing of the product is associated with a second tester.

Optionally, the image analyzer 2004 is configured to perform an image subtraction based on the first image and the second image to obtain a subtracted image.

Optionally, the image analyzer 2004 is configured to analyze a distribution of non-zero pixel values in the subtracted image.

Optionally, the mask generator 2006 is configured to create the mask based on a result of the analysis of the distribution of the non-zero pixel values in the subtracted image.

Optionally, the image analyzer 2004 is configured to determine a second part of the product that is different in the first image and the second image, and wherein the mask generator 2006 is configured to create the mask for also covering the image of the second part of the product.

Optionally, the apparatus 2000 further includes a non-transitory medium configured to store the mask in association with an identity of the product.

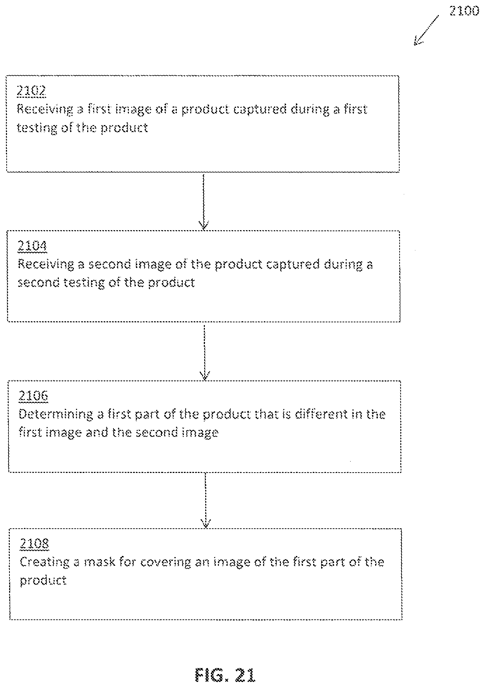

**FIG. 21** illustrates a method 2100 in accordance with some embodiments. The method 2100 is a processor-implemented method for product testing. The method 2100 may be performed by the system 10 of **FIG. 12****.** In one implementation, the method 2100 may be performed by the apparatus 2000 of **FIG. 20****.** As shown in the figure, the method 2100 includes: receiving a first image of a product captured during a first testing of the product (item 2102); receiving a second image of the product captured during a second testing of the product (item 2104); determining a first part of the product that is different in the first image and the second image (item 2106); and creating a mask for covering an image of the first part of the product (item 2108).

In some embodiments, with respect to the method 2100, the first testing of the product is associated with a first tester, and the second testing of the product is associated with a second tester.

In some embodiments, with respect to the method 2100, the act of determining the first part of the product that is different in the first image and the second image comprises performing an image subtraction based on the first image and the second image to obtain a subtracted image.

In some embodiments, with respect to the method 2100, the act of determining the first part of the product that is different in the first image and the second image also comprises analyzing a distribution of non-zero pixel values in the subtracted image.

In some embodiments, with respect to the method 2100, the mask is created based on a result of the analysis of the distribution of the non-zero pixel values in the subtracted image.

In some embodiments, the method 2100 may further include determining a second part of the product that is different in the first image and the second image, and wherein the mask is created for also covering the image of the second part of the product.

In some embodiments, the method 2100 may further include storing the mask in a non-transitory medium in association with an identity of the product.

In some embodiments, the method 2100 may be performed in response to a processing unit processing a set of instructions stored in a processor-readable medium. In particular, the processor-readable medium includes a set of instructions, wherein an execution of the instructions by a processing unit will cause a method for to be performed, the method comprising: receiving a first image of a product captured during a first testing of the product; receiving a second image of the product captured during a second testing of the product; determining a first part of the product that is different in the first image and the second image; and creating a mask for covering an image of the first part of the product.

### Script Generator

As discussed, in some embodiments, the product testing machine 1540 is configured perform machine-based product testing based on a script, wherein the script is based on a previous testing performed by a tester. In some embodiments, the system 10 may further include a component configured to generate the script. **FIG. 22** illustrates an apparatus 2200, which is a component of an electronic product testing system, wherein the component is configured to create a script for execution by a product testing device. The component 2200 may be a processing unit. Also, in some embodiments, the apparatus 2200 itself may be considered as a component of a product testing device. In addition, in some embodiments, the apparatus 2200 may be implemented as a part of the product testing machine 1540, or as a module that is communicatively coupled to the product testing machine 1540. As shown in the figure, the apparatus 2200 includes: an input 2202 configured to receive first data regarding a first tracked action performed while testing a first product; and a processing unit 2204 configured to create a script based on the first data, wherein the script is electronically executable by a product testing machine to perform machine-testing of a second product, the second product having at least one feature that is different from the first product.

Optionally, the apparatus is a part of the product testing machine.

Optionally, the input 2202 is also configured to receive second data regarding a second tracked action performed while testing the first product, and wherein the processing unit 2204 is configured to create the script based also on the second data.

Optionally, the first tracked action was for testing a first feature of the first product, and the second tracked action was for testing a second feature of the first product.

Optionally, the first tracked action was for testing a feature of the first product by a first tester, and the second tracked action was for testing the feature of the first product by a second tester.

Optionally, the first data indicates a first period between the first tracked action and another tracked action performed by the first tester while testing the feature of the first product; wherein the second data indicates a second period between the second tracked action and another tracked action performed by the second tester while testing the feature of the first product; and wherein the processing unit 2204 is configured to select a shorter one of the first period and the second period for inclusion in the script.

Optionally, the first data is stored in a first file, the second data is stored in a second file, and wherein the processing unit is configured to create the script by combining the first data and the second data.

Optionally, the apparatus 2200 further includes a non-transitory medium configured to store the script for access by the product testing machine.

Optionally, the first tracked action comprises a tracked cursor movement, a tracked object selection, a typing of a text, an inputting of a key, or an outputting of a voice.

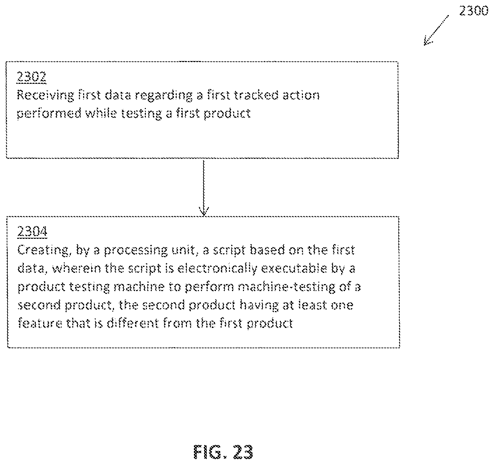

**FIG. 23** illustrates a method 2300 in accordance with some embodiments. The method 2300 is a processor-implemented method for product testing. In particular, the method 2300 is for creating a script for execution by a product testing machine to perform machine-based product testing. The method 2300 may be performed by the system 10 of **FIG. 12****.** In one implementation, the method 2300 may be performed by the apparatus 2200 of **FIG. 22****.** As shown in the figure, the method 2300 includes: receiving first data regarding a first tracked action performed while testing a first product (item 2302); and creating, by a processing unit, a script based on the first data (item 2304). The script is electronically executable by a product testing machine (e.g., product testing machine 1540) to perform machine-testing of a second product, the second product having at least one feature that is different from the first product.

In some embodiments, with respect to the method 2300, the processing unit is a part of the product testing machine.

In some embodiments, the method 2300 may further include receiving second data regarding a second tracked action performed while testing the first product, and wherein the script is created based also on the second data.

In some embodiments, with respect to the method 2300, the first tracked action was for testing a first feature of the first product, and the second tracked action was for testing a second feature of the first product.

In some embodiments, with respect to the method 2300, the first tracked action was for testing a feature of the first product by a first tester, and the second tracked action was for testing the feature of the first product by a second tester.

In some embodiments, with respect to the method 2300, the first data indicates a first period between the first tracked action and another tracked action performed by the first tester while testing the feature of the first product; wherein the second data indicates a second period between the second tracked action and another tracked action performed by the second tester while testing the feature of the first product; and wherein the method further comprises selecting a shorter one of the first period and the second period for inclusion in the script.

In some embodiments, with respect to the method 2300, the first data is stored in a first file, the second data is stored in a second file, and wherein the script is created by combining the first data and the second data.

In some embodiments, the method 2300 may further include storing the script in a non-transitory medium for access by the product testing machine.

In some embodiments, with respect to the method 2300, the first tracked action comprises a tracked cursor movement, a tracked object selection, a typing of a text, an inputting of a key, or an outputting of a voice.

In some embodiments, the method 2300 may be performed in response to a processing unit processing a set of instructions stored in a processor-readable medium. In particular, the processor-readable medium includes a set of instructions, wherein an execution of the instructions by a processing unit will cause a method for to be performed, the method comprising: receiving first data regarding a first tracked action performed while testing a first product; and creating, by the processing unit, a script based on the first data, wherein the script is electronically executable by a product testing machine to perform machine-testing of a second product, the second product having at least one feature that is different from the first product.

### Specialized Processing System

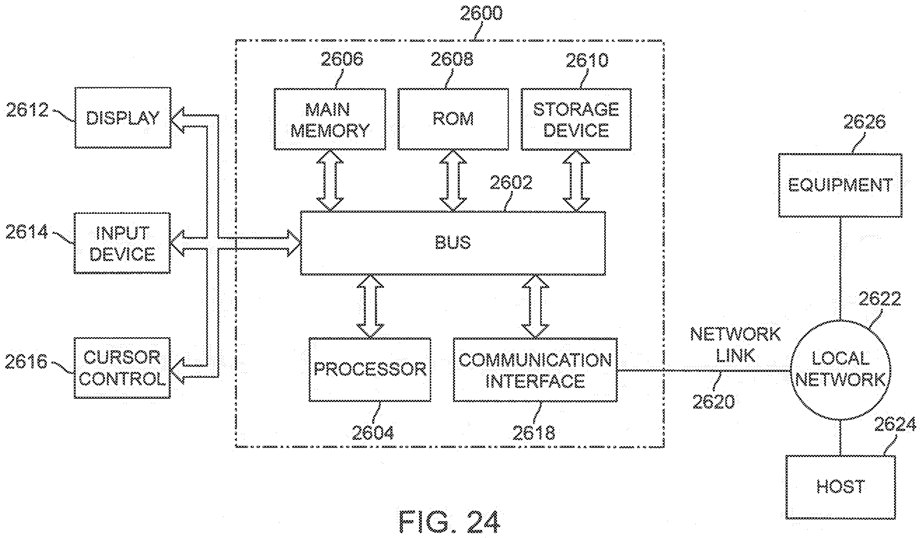

**FIG. 24** is a block diagram illustrating an embodiment of a specialized processing system 2600 that can be used to implement various embodiments or features described herein. For example, the processing system 2600 may be used to implement the system 10 of **FIG. 1A** and **FIG. 1B****,** the system 10 of **FIG. 11** and **FIG. 12****,** or any component thereof. As another example, the processing system 2600 may be an example of a device being used by a product tester. Also, in some embodiments, the processing system 2600 may be used to implement the tracker 1300, the retrieving module 1530, the product testing machine 1540, the image capturer 1550, the dispatch module 1560, a component of any of the foregoing, or any combination of the foregoing. Furthermore, in some embodiments, the processing system 2600 may be considered a processing unit that is a part of the tracker 1300, a part of the retrieving module 1530, a part of the product testing machine 1540, a part of the image capturer 1550, a part of the dispatch module 1560, or any combination of the foregoing. In addition, in some embodiments, the processing system 2600 may be configured to implement the apparatus 1950, the apparatus 2000, the apparatus 2200, or any combination of the foregoing.

Processing system 2600 includes a bus 2602 or other communication mechanism for communicating information, and a processor 2604 coupled with the bus 2602 for processing information. The processor system 2600 also includes a main memory 2606, such as a random access memory (RAM) or other dynamic storage device, coupled to the bus 2602 for storing information and instructions to be executed by the processor 2604. The main memory 2606 also may be used for storing temporary variables or other intermediate information during execution of instructions to be executed by the processor 2604. The processor system 2600 further includes a read only memory (ROM) 2608 or other static storage device coupled to the bus 2602 for storing static information and instructions for the processor 2604. A data storage device 2610, such as a magnetic disk or optical disk, is provided and coupled to the bus 2602 for storing information and instructions.

The processor system 2600 may be coupled via the bus 2602 to a display 2612, such as a cathode ray tube (CRT), for displaying information to a user. An input device 2614, including alphanumeric and other keys, is coupled to the bus 2602 for communicating information and command selections to processor 2604. Another type of user input device is cursor control 2616, such as a mouse, a trackball, or cursor direction keys for communicating direction information and command selections to processor 2604 and for controlling cursor movement on display 2612. This input device typically has two degrees of freedom in two axes, a first axis (e.g., x) and a second axis (e.g., y), that allows the device to specify positions in a plane.

In some embodiments, the processor system 2600 can be used to perform various functions described herein. According to some embodiments, such use is provided by processor system 2600 in response to processor 2604 executing one or more sequences of one or more instructions contained in the main memory 2606. Those skilled in the art will know how to prepare such instructions based on the functions and methods described herein. Such instructions may be read into the main memory 2606 from another processor-readable medium, such as storage device 2610. Execution of the sequences of instructions contained in the main memory 2606 causes the processor 2604 to perform the process steps described herein. One or more processors in a multiprocessing arrangement may also be employed to execute the sequences of instructions contained in the main memory 2606. In alternative embodiments, hard-wired circuitry may be used in place of or in combination with software instructions to implement the various embodiments described herein. Thus, embodiments are not limited to any specific combination of hardware circuitry and software.

The term "processor-readable medium" as used herein refers to any medium that participates in providing instructions to the processor 2604 for execution. Such a medium may take many forms, including but not limited to, non-volatile media, volatile media, and transmission media. Non-volatile media includes, for example, optical or magnetic disks, such as the storage device 2610. A non-volatile medium may be considered an example of non-transitory medium. Volatile media includes dynamic memory, such as the main memory 2606. A volatile medium may be considered an example of non-transitory medium. Transmission media includes coaxial cables, copper wire and fiber optics, including the wires that comprise the bus 2602. Transmission media can also take the form of acoustic or light waves, such as those generated during radio wave and infrared data communications.

Common forms of processor-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a processor can read.

Various forms of processor-readable media may be involved in carrying one or more sequences of one or more instructions to the processor 2604 for execution. For example, the instructions may initially be carried on a magnetic disk of a remote computer. The remote computer can load the instructions into its dynamic memory and send the instructions over a telephone line using a modem. A modem local to the processing system 2600 can receive the data on the telephone line and use an infrared transmitter to convert the data to an infrared signal. An infrared detector coupled to the bus 2602 can receive the data carried in the infrared signal and place the data on the bus 2602. The bus 2602 carries the data to the main memory 2606, from which the processor 2604 retrieves and executes the instructions. The instructions received by the main memory 2606 may optionally be stored on the storage device 2610 either before or after execution by the processor 2604.

The processing system 2600 also includes a communication interface 2618 coupled to the bus 2602. The communication interface 2618 provides a two-way data communication coupling to a network link 2620 that is connected to a local network 2622. For example, the communication interface 2618 may be an integrated services digital network (ISDN) card or a modem to provide a data communication connection to a corresponding type of telephone line. As another example, the communication interface 2618 may be a local area network (LAN) card to provide a data communication connection to a compatible LAN. Wireless links may also be implemented. In any such implementation, the communication interface 2618 sends and receives electrical, electromagnetic or optical signals that carry data streams representing various types of information.

The network link 2620 typically provides data communication through one or more networks to other devices. For example, the network link 2620 may provide a connection through local network 2622 to a host computer 2624 or to equipment 2626 such as a radiation beam source or a switch operatively coupled to a radiation beam source. The data streams transported over the network link 2620 can comprise electrical, electromagnetic or optical signals. The signals through the various networks and the signals on the network link 2620 and through the communication interface 2618, which carry data to and from the processing system 2600, are exemplary forms of carrier waves transporting the information. The processing system 2600 can send messages and receive data, including program code, through the network(s), the network link 2620, and the communication interface 2618.

It should be noted that as used in this specification, the term "image" is not limited to an image that is displayed, and may also include image that is not displayed, such as image data stored in a non-transitory medium. Similarly, as used in this specification, the term "video" is not limited to a video that is displayed, and may also include video that is not displayed, such as video data stored in a non-transitory medium.

Also, as used in this specification, the terms "first", "second", "third", etc., do not necessarily refer to order of items. Rather, these terms may be used to distinguish different items from each other. For example, "first product tester" does not necessarily mean that the product tester is the first in order. Also, "second product tester" does not necessarily mean that the product tester is the second in order. Rather, these terms are used to identify two different product testers.

Furthermore, as used in this specification, the term "machine" (as in the term "product testing machine") may refer to a device, a component, a system, an application, software, a virtual machine, or any form of a processing unit or module, that is configured to perform one or more desired functions. In some embodiments, a machine may include at least some hardware. Similarly, as used in this specification, the term "device" may refer to a physical device, a component, a system, an application, software, a virtual machine, or any form of a processing unit or module, that is configured to perform one or more desired functions. In some embodiments, a device may include at least some hardware.

In addition, as used in this specification, the term "processing unit" may refer to hardware, software, or combination thereof. Also, the term "processing unit" may refer to one or more processors, one or more pieces of software or applications, one or more computing systems or component(s) thereof, one or more virtual machines or component(s) thereof, etc. In one implementation, a processing unit may include at least some hardware.

Although particular embodiments have been shown and described, it will be understood that they are not intended to limit the present inventions, and it will be obvious to those skilled in the art that various changes and modifications may be made without departing from the scope of the present invention as defined by the claims.

## Claims

1. A processor-implemented method (1900) for product testing a first product (1508) and a second product (1509);
wherein the first product (1508) comprises one of a web page, a web site, a computer application, a mobile device application or a processor application, and the second product (1509) comprises a new version of the first product (1508);
the second product (1509) having at least one feature that is different from the first product (1508), the method comprising:
accessing an electronic file, the electronic file containing data generated based on a testing of the first product (1508), the data indicating an action performed to interact with an interface feature of the first product in response to a product testing instruction;
**characterized by**:
performing testing of the second product (1509), by a testing device (1540) having a processing unit, based on the data in the electronic file, wherein the testing device is configured to re-execute the action based on the data in the electronic file to interact with an interface feature of the second product.

2. The method (1900) of claim 1, wherein the data in the electronic file comprises information regarding tracked actions of a tester (14), and respective time stamps of the tracked actions.

3. The method (1900) of claim 2, wherein the act of performing the testing of the second product (1509) comprises re-executing the tracked actions to test the second product (1509) based on the information in the electronic file regarding the tracked actions of the tester (14).

4. The method (1900) of claim 1, wherein the act of performing the testing of the second product (1509) comprises simulating actions of a tester (14).

5. The method (1900) of claim 1, wherein the electronic file comprises a script, and wherein the act of performing the testing of the second product (1509) comprises running the script for testing the second product (1509).

6. The method (1900) of claim 1, wherein the data in the electronic file are based on tracked action(s), and wherein the data in the electronic file comprises:
cursor positions;
a text typed by a tester (14);
a location of the text typed by the tester (14),
a location of an object selection; or
any combination of the foregoing.

7. The method (1900, 1980) of claim 1, further comprising:
obtaining a first image (1850) that is associated with the testing of the first product (1508), and
obtaining a second image (1852) that is associated with the testing of the second product (1509).

8. The method (1900, 1980) of claim 7, wherein the first image (1850) is stored in a non-transitory medium in association with the data, the data comprising information regarding a tracked action of a tester (14).

9. The method (1900, 1980) of claim 7, wherein the first image (1850) is based on a completion of a first task performed during the testing of the first product (1508), and wherein the second image (1852) is based on a completion of a second task performed during the testing of the second product (1509).

10. The method (1900, 1980) of claim 7, wherein the first image (1850) comprises a first content of the first product (1508), the first content indicating a first result of a first task for testing the first product (1508); and
wherein the second image comprises a second content of the second product, the second content indicating a second result of a second task for testing the second product.

11. The method (1900, 1980) of claim 7, further comprising:
applying a mask (1860) to the first image (1850) to create a first masked image (1862),
applying the mask (1860) to the second image (1852) to create a second masked image (1864), and
comparing the first masked image (1862) with the second masked image (1864);
wherein the mask (1860) is configured to block out one or more portions of the first image (1508) and the second image (1509).

12. The method (1900, 1980) of claim 11, wherein the testing of the second product (1508) comprises testing a feature of the second product (1509), and wherein the method further comprising determining whether the testing of the feature of the second product (1509) fails or not based on the comparison (1988) of the first masked image (1862) and the second masked image (1864).

13. The method (1900, 1980, 2300) of claim 1, wherein the processing unit is configured to test multiple features of the second product (1509), the multiple features comprising at least a first feature and a second feature, wherein the act of performing testing of the second product (1509) comprises testing the first feature of the second product (1509) by running a first script that is based on a first tracked action of a tester (14), and testing the second feature of the second product (1509) by running a second script that is based on a second tracked action of the tester (14).

14. The method (1900) of claim 7, further comprising determining the second image (1852) by comparing a sequence of image frames with the first image (1850), and selecting one of the image frames that matches the first image (1850) as the second image (1852).

15. The method (1900) of claim 1, further comprising tracking an interaction of a tester (14) with a web page, wherein the data in the electronic file is based on the tracked interaction.

16. The method (1900) of claim 15, wherein the act of tracking comprises:
tracking a movement of a cursor,
tracking a selection of a tab,
tracking a selection of a button,
tracking a selection of an icon,
tracking a selection of a text,
tracking a key stroke,
tracking a voice input, or
any combination of the foregoing.

17. The method (1900) of claim 1, wherein the act of performing the testing of the second product (1509) comprises:
virtually moving a cursor with respect to a testing interface (402, 1840) without input from a cursor control;
virtually making a cursor selection in the testing interface (402, 1840) without input from the cursor control;
virtually typing a text in a field of the testing interface (402, 1840) without input from a keyboard.

18. The method (1900) of claim 1, wherein the testing of the first product (1508) is human-based, and the testing of the second product (1509) is machine-based.

19. The method (1900) of claim 1, wherein the data comprises information regarding a selection of a first object, the first object being at a first position in the first product (1508); and
wherein the testing of the second product (1509) comprises selecting a second object in the second product (1509) based on the information regarding the selection of the first object in the first product (1508), the second object being at a second position in the second product (1509), wherein the second position is different from the first position.

20. A processor-readable medium comprising a set of instructions, wherein an execution of the instructions by a processing unit will cause the method of any of claims 1-19 to be performed.

## Patentansprüche

1. Prozessorimplementiertes Verfahren (1900) zum Produkttesten eines ersten Produkts (1508) und eines zweiten Produkts (1509);
wobei das erste Produkt (1508) eines aus einer Webpage, einer Website, einer Computeranwendung, einer Anwendung einer Mobilvorrichtung oder eine Prozessoranwendung umfasst und das zweite Produkt (1509) eine neue Version des ersten Produkts (1508) umfasst;
wobei das zweite Produkt (1509) wenigstens ein Merkmal aufweist, das von dem ersten Produkt (1508) verschieden ist, wobei das Verfahren Folgendes umfasst:
Zugreifen auf eine elektronische Datei, wobei die elektronische Datei Daten enthält, die basierend auf einem Testen des ersten Produkts (1508) erzeugt wurden, wobei die Daten eine Aktion angeben, die ausgeführt wurde, um mit einem Schnittstellenmerkmal des ersten Produkts in Reaktion auf eine Produkttestanweisung zu interagieren; **gekennzeichnet durch**:
Ausführen von Testen des zweiten Produkts (1509) durch eine Testvorrichtung (1540), die eine Verarbeitungseinheit aufweist, basierend auf den Daten in der elektronischen Datei, wobei die Testvorrichtung konfiguriert ist, die Aktion basierend auf Daten in der elektronischen Datei erneut auszuführen, um mit einem Schnittstellenmerkmal des zweiten Produkts zu interagieren.

2. Verfahren (1900) nach Anspruch 1, wobei die Daten in der elektronischen Datei Informationen, die verfolgte Aktionen eines Testers (14) betreffen, und entsprechende Zeitstempel der verfolgen Aktionen umfassen.

3. Verfahren (1900) nach Anspruch 2, wobei die Handlung zum Ausführen des Testens des zweiten Produkts (1509) das erneute Ausführen der verfolgten Aktionen zum Testen des zweiten Produkts (1509) basierend auf den Informationen in der elektronischen Datei, die die verfolgten Aktionen des Testers (14) betreffen, umfasst.

4. Verfahren (1900) nach Anspruch 1, wobei die Handlung zum Ausführen des Testens des zweiten Produkts (1509) das Simulieren von Aktionen eines Testers (14) umfasst.

5. Verfahren (1900) nach Anspruch 1, wobei die elektronische Datei ein Skript umfasst und wobei die Handlung zum Ausführen des Testens des zweiten Produkts (1509) das Ablaufen des Skripts zum Testen des zweiten Produkts (1509) umfasst.

6. Verfahren (1900) nach Anspruch 1, wobei die Daten in der elektronischen Datei auf verfolgten Aktion(en) basieren und wobei die Daten in der elektronischen Datei Folgendes umfassen:
Cursor-Positionen;
einen durch einen Tester (14) geschriebenen Text;
einen Ort des durch den Tester (14) geschriebenen Texts, einen Ort einer Objektauswahl; oder
irgendeine Kombination aus dem Vorstehenden.

7. Verfahren (1900, 1980) nach Anspruch 1, das ferner Folgendes umfasst:
Erhalten eines ersten Bildes (1850), das dem Testen des ersten Produkts (1508) zugeordnet ist, und
Erhalten eines zweiten Bildes (1852), das dem Testen des zweiten Produkts (1509) zugeordnet ist.

8. Verfahren (1900, 1980) nach Anspruch 7, wobei das erste Bild (1850) in einem nicht-transitorischen Medium in Zuordnung zu den Daten gespeichert ist, wobei die Daten Informationen, die eine verfolgte Aktion eines Testers (14) betreffen, umfassen.

9. Verfahren (1900, 1980) nach Anspruch 7, wobei das erste Bild (1850) auf einer Fertigstellung einer ersten Aufgabe, die während des Testens des ersten Produkts (1508) ausgeführt wird, basiert und wobei das zweite Bild (1852) auf einer Fertigstellung einer zweiten Aufgabe, die während des Testens des zweiten Produkts (1509) ausgeführt wird, basiert.

10. Verfahren (1900, 1980) nach Anspruch 7, wobei das erste Bild (1850) einen ersten Inhalt des ersten Produkts (1508) umfasst, wobei der erste Inhalt ein erstes Ergebnis einer ersten Aufgabe zum Testen des ersten Produkts (1508) angibt; und
wobei das zweite Bild einen zweiten Inhalt des zweiten Produkts umfasst, wobei der zweite Inhalt ein zweites Ergebnis einer zweiten Aufgabe zum Testen des zweiten Produkts angibt.

11. Verfahren (1900, 1980) nach Anspruch 7, das ferner Folgendes umfasst:
Anwenden einer Maske (1860) auf das erste Bild (1850), um ein erstes maskiertes Bild (1862) zu erzeugen,
Anwenden der Maske (1860) auf das zweite Bild (1852), um ein zweites maskiertes Bild (1864) zu erzeugen, und
Vergleichen des ersten maskierten Bildes (1862) mit dem zweiten maskierten Bild (1864);
wobei die Maske (1860) konfiguriert ist, einen oder mehrere Abschnitte des ersten Bildes (1508) und des zweiten Bildes (1509) zu blockieren.

12. Verfahren (1900, 1980) nach Anspruch 11, wobei das Testen des zweiten Produkts (1508) das Testen eines Merkmals des zweiten Produkts (1509) umfasst und wobei das Verfahren ferner das Bestimmen, ob das Testen des Merkmals des zweiten Produkts (1509) fehlschlägt oder nicht, basierend auf dem Vergleich (1988) des ersten maskierten Bildes (1862) und des zweiten maskierten Bildes (1864) umfasst.

13. Verfahren (1900, 1980, 2300) nach Anspruch 1, wobei die Verarbeitungseinheit konfiguriert ist, mehrere Merkmale des zweiten Produkts (1509) zu testen, wobei die mehreren Merkmale wenigstens ein erstes Merkmal und ein zweites Merkmal umfassen, wobei die Handlung zum Ausführen des Testens des zweiten Produkts (1509) das Testen des ersten Merkmals des zweiten Produkts (1509) durch Ablaufen eines ersten Skripts, das auf einer ersten verfolgen Aktion eines Testers (14) basiert, und Testen des zweiten Merkmals des zweiten Produkts (1509) durch Ablaufen eines zweiten Skripts, das auf einer zweiten verfolgten Aktion des Testers (14) basiert, umfasst.

14. Verfahren (1900) nach Anspruch 7, das ferner das Bestimmen des zweiten Bildes (1852) durch Vergleichen einer Folge von Bildrahmen mit dem ersten Bild (1850) und Auswählen eines der Bildrahmen, der mit dem ersten Bild (1850) übereinstimmt, als das zweite Bild (1852) umfasst.

15. Verfahren (1900) nach Anspruch 1, das ferner das Verfolgen einer Interaktion eines Testers (14) mit einer Webpage umfasst, wobei die Daten in der elektronischen Datei auf der verfolgten Interaktion basieren.

16. Verfahren (1900) nach Anspruch 15, wobei die Handlung zum Verfolgen Folgendes umfasst:
Verfolgen einer Bewegung eines Cursors,
Verfolgen einer Auswahl eines Reiters,
Verfolgen einer Auswahl einer Taste,
Verfolgen einer Auswahl eines Symbols,
Verfolgen einer Auswahl eines Texts,
Verfolgen eines Tastenanschlags,
Verfolgen einer Spracheingabe oder
irgendeine Kombination des Vorstehenden.

17. Verfahren (1900) nach Anspruch 1, wobei die Handlung zum Ausführen des Testens des zweiten Produkts (1509) Folgendes umfasst:
virtuelles Bewegen eines Cursors in Bezug auf eine Testschnittstelle (402, 1840) ohne Eingabe aus einer Cursor-Steuerung;
virtuelles Treffen einer Cursor-Auswahl in der Testschnittstelle (402, 1840) ohne Eingabe aus der Cursor-Steuerung;
virtuelles Schreiben eines Testes in einem Feld der Testschnittstelle (402, 1840) ohne Eingabe von einer Tastatur.

18. Verfahren (1900) nach Anspruch 1, wobei das Testen des ersten Produkts (1508) auf einem Menschen basiert und das Testen des zweiten Produkts (1509) auf einer Maschine basiert.

19. Verfahren (1900) nach Anspruch 1, wobei die Daten Informationen umfassen, die eine Auswahl eines ersten Objekts betreffen, wobei das erste Objekt an einer ersten Position in dem ersten Produkt (1508) ist; und
wobei das Testen des zweiten Produkts (1509) das Auswählen eines zweiten Objekts in dem zweiten Produkt (1509) basierend auf den Informationen, die die Auswahl des ersten Objekts in dem ersten Produkt (1508) betreffen, umfasst, wobei das zweite Objekt an einer zweiten Position in dem zweiten Produkt (1509) ist, wobei die zweite Position von der ersten Position verschieden ist.

20. Prozessorlesbares Medium, das eine Gruppe von Anweisungen umfasst, wobei eine Ausführung der Anweisungen durch eine Verarbeitungseinheit veranlassen wird, dass das Verfahren nach einem der Ansprüche 1-19 ausgeführt wird.

## Revendications

1. Procédé (1900) mis en œuvre par processeur pour le test de produits, à savoir d'un premier produit (1508) et d'un deuxième produit (1509) ;
le premier produit (1508) comprenant soit une page Web, soit un site Web, soit une application d'ordinateur, soit une application de dispositif mobile, soit une application de processeur, et le deuxième produit (1509) comprenant une nouvelle version du premier produit (1508) ;
le deuxième produit (1509) présentant au moins une caractéristique qui est différente du premier produit (1508), le procédé comprenant :
l'accès à un fichier électronique, le fichier électronique contenant des données générées sur la base d'un test du premier produit (1508), les données indiquant une action réalisée pour interagir avec une caractéristique d'interface du premier produit en réponse à une instruction de test de produit ;
**caractérisé par** :
la réalisation d'un test du deuxième produit (1509), par un dispositif de test (1540) pourvu d'une unité de traitement, sur la base des données dans le fichier électronique, le dispositif de test étant configuré pour réexécuter l'action sur la base des données dans le fichier électronique pour interagir avec une caractéristique d'interface du deuxième produit.

2. Procédé (1900) selon la revendication 1, dans lequel les données dans le fichier électronique comprennent des informations concernant des actions suivies d'un testeur (14) et des estampilles temporelles respectives des actions suivies.

3. Procédé (1900) selon la revendication 2, dans lequel l'étape de réalisation du test du deuxième produit (1509) comprend la réexécution des actions suivies pour tester le deuxième produit (1509) sur la base des informations dans le fichier électronique concernant les actions suivies du testeur (14).

4. Procédé (1900) selon la revendication 1, dans lequel l'étape de réalisation du test du deuxième produit (1509) comprend la simulation d'actions d'un testeur (14).

5. Procédé (1900) selon la revendication 1, dans lequel le fichier électronique comprend un script, et dans lequel l'étape de réalisation du test du deuxième produit (1509) comprend l'exécution du script pour le test du deuxième produit (1509).

6. Procédé (1900) selon la revendication 1, dans lequel les données dans le fichier électronique sont basées sur une (des) action(s) suivie(s), et dans lequel les données dans le fichier électronique comprend :
des positions de curseur ;
un texte saisi par un testeur (14) ;
un emplacement du texte saisi par le testeur (14),
un emplacement d'une sélection d'objet ; ou
toute combinaison des éléments précédents.

7. Procédé (1900, 1980) selon la revendication 1, comprenant en outre :
l'obtention d'une première image (1850) qui est associée au test du premier produit (1508), et
l'obtention d'une deuxième image (1852) qui est associée au test du deuxième produit (1509).

8. Procédé (1900, 1980) selon la revendication 7, dans lequel la première image (1850) est stockée dans un support non transitoire en association avec les données, les données comprenant des informations concernant une action suivie d'un testeur (14).

9. Procédé (1900, 1980) selon la revendication 7, dans lequel la première image (1850) est basée sur un achèvement d'une première tâche exécutée pendant le test du premier produit (1508), et dans lequel la deuxième image (1852) est basée sur un achèvement d'une deuxième tâche réalisée pendant le test du deuxième produit (1509).

10. Procédé (1900, 1980) selon la revendication 7, dans lequel la première image (1850) comprend un premier contenu du premier produit (1508), le premier contenu indiquant un premier résultat d'une première tâche pour le test du premier produit (1508) ; et
dans lequel la deuxième image comprend un deuxième contenu du deuxième produit, le deuxième contenu indiquant un deuxième résultat d'une deuxième tâche pour le test du deuxième produit.

11. Procédé (1900, 1980) selon la revendication 7, comprenant en outre :
l'application d'un masque (1860) à la première image (1850) pour créer une première image masquée (1862), l'application d'un masque (1860) à la deuxième image (1852) pour créer une deuxième image masquée (1864), et la comparaison de la première image masquée (1862) à la deuxième image masquée (1864) ;
le masque (1860) étant configuré pour bloquer une ou plusieurs parties de la première image (1508) et de la deuxième image (1509).

12. Procédé (1900, 1980) selon la revendication 11, dans lequel le test du deuxième produit (1508) comprend le test d'une caractéristique du deuxième produit (1509), et lequel procédé comprend en outre la détermination si le test de la caractéristique du deuxième produit (1509) est un échec ou non sur la base de la comparaison (1988) de la première image masquée (1862) et de la deuxième image masquée (1864).

13. Procédé (1900, 1980, 2300) selon la revendication 1, dans lequel l'unité de traitement est configurée pour tester de multiples caractéristiques du deuxième produit (1509), les multiples caractéristiques comprenant au moins une première caractéristique et une deuxième caractéristique, l'étape de réalisation d'un test du deuxième produit (1509) comprenant le test de la première caractéristique du deuxième produit (1509) par exécution d'un premier script qui est basé sur une première action suivie d'un testeur (14), et le test de la deuxième caractéristique du deuxième produit (1509) par exécution d'un deuxième script qui est basé sur une deuxième action suivie du testeur (14).

14. Procédé (1900) selon la revendication 7, comprenant en outre la détermination de la deuxième image (1852) par comparaison d'une séquence de prises de vue d'image à la première image (1850), et la sélection, comme la deuxième image (1852), de l'une des prises de vue d'image qui correspond à la première image (1850).

15. Procédé (1900) selon la revendication 1, comprenant en outre le suivi d'une interaction d'un testeur (14) avec une page Web, les données dans le fichier électronique étant basées sur l'interaction suivie.

16. Procédé (1900) selon la revendication 15, dans lequel l'étape de suivi comprend :
le suivi d'un déplacement d'un curseur,
le suivi d'une sélection d'un onglet,
le suivi d'une sélection d'un bouton,
le suivi d'une sélection d'une icône,
le suivi d'une sélection d'un texte,
le suivi d'une frappe de touche,
le suivi d'une entrée vocale, ou
toute combinaison des éléments précédents.

17. Procédé (1900) selon la revendication 1, dans lequel l'étape de réalisation du test du deuxième produit (1509) comprend :
le déplacement virtuel d'un curseur par rapport à une interface de test (402, 1840) sans entrée à partir d'une commande de curseur ;
la réalisation virtuelle d'une sélection par curseur dans la surface de test (402, 1840) sans entrée à partir de la commande de curseur ;
la saisie virtuelle d'un texte dans un champ de la surface de test (402, 1840) sans entrée à partir d'une clavier.

18. Procédé (1900) selon la revendication 1, dans lequel le test du premier produit (1508) est orienté homme et le test du deuxième produit (1509) est orienté machine.

19. Procédé (1900) selon la revendication 1, dans lequel les données comprennent des informations concernant une sélection d'un premier objet, le premier objet occupant
une première position dans le premier produit (1508) ; et
dans lequel le test du deuxième produit (1509) comprend la sélection d'un deuxième objet dans le deuxième produit (1509) sur la base des informations concernant la sélection du premier objet dans le premier produit (1508), le deuxième objet occupant une deuxième position dans le deuxième produit (1509), la deuxième position étant différente de la première position.

20. Support lisible par processeur comprenant un jeu d'instructions, une exécution des instructions par une unité de traitement entraînant la réalisation du procédé selon l'une quelconque des revendications 1 à 19.
